# FASCICULE DE BREVET EUROPEEN

(11) **EP 2 928 741 B1**
(45) Date de publication et mention de la délivrance du brevet: **26.07.2017**
(21) Numéro de dépôt: 13818285.2
(22) Date de dépôt: 10.12.2013
(51) Int. Cl.: B60T 15/42

(54) **DISTRIBUTEUR PNEUMATIQUE DE FREINAGE POUR VEHICULE FERROVIAIRE**
BREMSDRUCKVERTEILER FÜR EIN SCHIENENFAHRZEUG
PNEUMATIC BRAKE VALVE UNIT FOR A RAIL VEHICLE

(30) Priorité: 10.12.2012 FR 1261851
(43) Date de publication de la demande: 14.10.2015
(73) Titulaire: Faiveley Transport Amiens, 80000 Amiens (FR)
(72) Inventeur: MARECHAL, Mickael, F-80600 Hem Hardinval (FR); LE GALL, Gilbert, F-80000 Amiens (FR)
(74) Mandataire: Santarelli
(86) Numéro de dépôt international: PCT/FR2013/053018
(87) Numéro de publication internationale: WO 2014/091143

(56) Documents cités:
- EP-A1- 0 001 131
- EP-A1- 0 070 405
- FR-A1- 2 731 192

## Description

L'invention a trait au freinage des véhicules ferroviaires.

On sait que le freinage des véhicules ferroviaires est traditionnellement commandé de façon pneumatique grâce à des distributeurs commandant des dispositifs de freinage. Dans un train, les ordres de freinage sont communiqués aux distributeurs par une conduite qui court le long du train. Cette conduite est appelée conduite générale.

On connait déjà des distributeurs pneumatiques de freinage pour véhicule ferroviaire, qui comportent :
- un raccord de conduite de freinage à connecter à une conduite de freinage prévue pour être reliée à un dispositif de freinage configuré pour fournir un freinage d'une intensité fonction de la pression régnant dans la conduite de freinage, aucun freinage ne devant être effectué lorsque la pression dans la conduite de freinage est la pression atmosphérique, un freinage devant être effectué lorsque la pression dans la conduite de freinage est supérieure à la pression atmosphérique ;
- un raccord de conduite générale à connecter à une conduite générale prévue pour être portée à une pression dont l'écart à une pression de référence est représentatif de l'intensité du freinage à effectuer, aucun freinage ne devant être effectué lorsque la pression dans la conduite générale est semblable à ladite pression de référence, un freinage devant être effectué lorsque la pression dans la conduite générale est inférieure à ladite pression de référence ;
- un raccord de réservoir de commande à connecter à un réservoir de commande prévu pour être porté à ladite pression de référence ;
- un raccord de réservoir auxiliaire à connecter à un réservoir auxiliaire prévu pour stocker de l'air comprimé ;
- un dispositif principal en liaison fluidique avec ledit raccord de conduite de freinage, ledit raccord de conduite générale, ledit raccord de réservoir de commande, ledit raccord de réservoir auxiliaire et un échappement à l'atmosphère, ledit dispositif principal étant configuré pour commander sélectivement un trajet de communication entre ledit raccord de conduite de freinage et soit ledit échappement soit ledit raccord de réservoir auxiliaire, en fonction de la pression audit raccord de conduite générale et de la pression audit raccord de réservoir de commande, afin que la pression au raccord de conduite de freinage soit de k fois l'écart entre la pression au raccord de réservoir de commande et la pression au raccord de conduite générale, k étant un rapport de proportionnalité préfixé, en général de l'ordre de 2,53 (3,8/1,5) ; et
- une valve de coupure en liaison fluidique avec ledit raccord de conduite de freinage, ledit raccord de conduite générale et ledit raccord de réservoir de commande, ladite valve de coupure étant configurée pour commander sélectivement un trajet de communication entre ledit raccord de conduite générale et ledit raccord de réservoir de commande, entre une position fermée et une position ouverte, ledit trajet étant en position ouverte lorsque la pression audit raccord de conduite de freinage est la pression atmosphérique et en position fermée lorsque la pression audit raccord de conduite de freinage est supérieure à la pression atmosphérique.

On notera que certains distributeurs du type susmentionné sont prévus pour que la conduite de freinage soit reliée directement au dispositif de freinage. D'autres distributeurs du type susmentionné sont prévus pour que la conduite de freinage soit reliée au dispositif de freinage par l'intermédiaire d'un relais pneumatique, la conduite de freinage étant connectée à une extrémité au raccord de conduite de freinage du distributeur tandis qu'à l'autre extrémité elle est connectée à un raccord d'entrée du relais pneumatique ; une autre conduite étant connectée à une extrémité au raccord de sortie du relais pneumatique et à l'autre extrémité au dispositif de freinage. Une telle conduite de freinage est en général appelée conduite de freinage fictif.

Dans le présent mémoire, l'expression « *conduite de freinage* » vise aussi bien une conduite à relier directement à un dispositif de freinage qu'une conduite à relier à un dispositif de freinage par l'intermédiaire d'un relais pneumatique.

D'une façon générale, dans les distributeurs pneumatiques susmentionnés, la valve de coupure sert à mettre en communication le réservoir de commande et la conduite générale lorsqu'aucun freinage ne doit être effectué. C'est ainsi que le réservoir de commande peut se remplir au démarrage du train et qu'ensuite, lorsqu'aucun freinage ne doit être effectué, la pression dans le réservoir de commande suit la pression de la conduite générale. Lorsqu'un freinage doit être effectué, la valve de coupure ferme le trajet de communication entre la conduite générale et le réservoir de commande, de sorte que la pression dans le réservoir de commande se conserve et peut alors constituer la pression de référence à laquelle est devenue inférieure la pression dans la conduite générale.

Comme indiqué ci-dessus, l'écart entre la pression dans la conduite générale et la pression de référence est représentatif de l'intensité du freinage à effectuer.

Le rôle du dispositif principal est de fournir au raccord de conduite de freinage une pression de k fois cet écart, k étant un rapport de proportionnalité préfixé, en général de 2,53 (3,8/1,5).

En effet, en général :
- lorsqu'aucun freinage ne doit être effectué, la pression dans la conduite générale est de l'ordre de 5 bars et la pression dans la conduite de freinage est la pression atmosphérique ; et
- lorsqu'un freinage d'intensité maximum doit être effectué, la pression dans la conduite générale est de l'ordre de 3,5 bars et la pression dans la conduite de freinage est de l'ordre de 3,8 bars.

Le rapport de proportionnalité k est préfixé pour que l'amplitude de variation de la pression dans la conduite de freinage (amplitude de 3,8 bars) corresponde à l'amplitude de variation de la pression dans la conduite générale (amplitude de 5 - 3,5 = 1,5 bar).

Bien entendu, dans le présent mémoire, comme il est d'usage en matière pneumatique, les pressions dont il est question sont les pressions relatives, c'est-à-dire que la valeur des pressions est l'écart à la pression atmosphérique.

En pratique, pour éviter que des diminutions minimes de la pression dans la conduite générale ne déclenchent un freinage, les distributeurs du type susmentionné sont prévus pour ne fournir une pression au raccord de conduite de freinage que si la pression au raccord de conduite générale diminue d'une façon prédéterminée.

Par exemple, la norme EN15355 spécifie que le distributeur :
- ne doit pas fournir de pression au raccord de conduite de freinage lorsque la pression au raccord de conduite générale diminue de moins de 0,3 bar en 60 secondes à partir de la pression d'environ 5 bars correspondant à un ordre d'absence de freinage ; et
- doit fournir une pression au raccord de conduite de freinage lorsque la pression au raccord de conduite générale diminue d'au moins 0,6 bar en 6 secondes à partir de la pression d'environ 5 bars correspondant à un ordre d'absence de freinage, la pression au raccord de conduite de freinage devant être fournie au plus tard 1,2 seconde après le début de la diminution de pression au raccord de conduite générale.

Dans le présent mémoire, il est entendu que cette insensibilité aux diminutions minimes de la pression au raccord de conduite générale est couverte par les indications selon lesquelles la pression au raccord de conduite de freinage est de k fois l'écart entre la pression au raccord de réservoir de commande et la pression au raccord de conduite générale.

En ce qui concerne la valve de coupure, en pratique le trajet de communication entre le raccord de conduite générale et le raccord de réservoir de commande est en position ouverte ou fermée lorsque la diminution de pression au raccord de conduite générale ou la pression au raccord de conduite de freinage atteignent certains seuils prédéterminés.

Par exemple, la norme EN15355 spécifie que le trajet entre le raccord de conduite générale et le raccord de réservoir de commande :
- doit être ouvert lorsque la diminution de pression au raccord de conduite générale est inférieure à 0,15 bar ; et
- doit être fermé lorsque la pression au raccord de conduite de freinage est supérieure ou égale à 0,3 bar.

Dans le présent mémoire, il est entendu que ces effets de seuil sont couverts par les indications selon lesquelles le trajet de communication entre le raccord de conduite générale et le raccord de réservoir de commande est en position ouverte lorsque la pression au raccord de conduite de freinage est la pression atmosphérique, et en position fermée lorsque la pression au raccord de conduite de freinage est supérieure à la pression atmosphérique.

Toujours en ce qui concerne la valve de coupure, la position ouverte ou fermée du trajet de communication entre le raccord de conduite générale et le raccord de réservoir de commande dépend :
- dans certains distributeurs, uniquement de la pression au raccord de conduite de freinage ; ou
- dans d'autres distributeurs, à la fois de la pression au raccord de conduite de freinage et de l'écart entre la pression au raccord de réservoir de commande et la pression au raccord de conduite générale (dans ce dernier cas, le trajet de communication est en position ouverte lorsque la pression au raccord de conduite de freinage est la pression atmosphérique et que la pression au raccord de réservoir de commande et la pression au raccord de conduite générale sont semblables ; et sinon le trajet est en position fermée).

Dans le présent mémoire, il est entendu que ces deux possibilités sont couvertes par les indications selon lesquelles le trajet de communication entre le raccord de conduite générale et le raccord de réservoir de commande est en position ouverte lorsque la pression au raccord de conduite de freinage est la pression atmosphérique, et en position fermée lorsque la pression au raccord de conduite de freinage est supérieure à la pression atmosphérique.

Certains distributeurs récents comportent, pour accélérer la propagation d'un ordre de freinage le long de la conduite générale, un dispositif accélérateur en liaison fluidique avec ledit raccord de conduite de freinage, ledit raccord de conduite générale, ledit raccord de réservoir de commande et un échappement à l'atmosphère, ledit dispositif accélérateur étant configuré pour commander sélectivement un trajet de communication entre ledit raccord de conduite générale et ledit échappement à l'atmosphère, entre une position fermée et une position ouverte, ledit trajet étant en position fermée sauf lorsque la pression audit raccord de conduite générale devient inférieure à la pression audit raccord de réservoir de commande alors que la pression audit raccord de conduite de freinage est encore à la pression atmosphérique.

Ainsi, entre le moment où un écart a commencé à exister entre la pression au raccord de réservoir de commande et la pression au raccord de conduite générale et le moment où le dispositif principal a commencé à fournir au raccord de conduite de freinage une pression de k fois cet écart, la conduite générale est mise à l'atmosphère par le dispositif accélérateur.

Il en résulte une diminution locale de la pression dans la conduite générale, qui favorise la propagation de l'ordre de freinage vers le prochain distributeur relié à la conduite générale.

Une valve de verrouillage d'un tel dispositif accélérateur est décrite par la demande de brevet français 2 731 192. Cette valve de verrouillage fait partie d'un distributeur dans lequel la valve de coupure comporte un trajet de communication dont la position ouverte ou fermée dépend à la fois de la pression au raccord de conduite de freinage et de l'écart entre la pression au raccord de réservoir de commande et la pression au raccord de conduite générale.

Ainsi, dans ce distributeur, le trajet de communication entre le raccord de conduite générale et le raccord de réservoir de commande est fermé lorsque la pression au raccord de réservoir de commande est supérieure à la pression au raccord de conduite générale. Par conséquent, lors d'un stationnement du train ou d'un freinage d'urgence, le réservoir de commande ne se vidange pas alors que la conduite générale se vidange.

Lors du redémarrage du train, l'on se trouve dans une situation où la pression au raccord de réservoir de commande est plus élevée que la pression au raccord de conduite générale (la conduite générale est alors à la pression atmosphérique), et par conséquent le trajet de communication du dispositif accélérateur (entre le raccord de conduite générale et l'échappement) est ouvert. La valve de verrouillage du dispositif accélérateur permet de fermer ce trajet de communication au redémarrage du train, pour que la montée en pression de la conduite générale puisse s'effectuer.

L'invention vise fournir un distributeur semblable mais plus performant tout en étant simple et économique.

L'invention propose à cet effet un distributeur pneumatique de freinage pour véhicule ferroviaire, comportant :
- un raccord de conduite de freinage à connecter à une conduite de freinage prévue pour être reliée à un dispositif de freinage configuré pour fournir un freinage d'une intensité fonction de la pression régnant dans la conduite de freinage, aucun freinage ne devant être effectué lorsque la pression dans la conduite de freinage est la pression atmosphérique, un freinage devant être effectué lorsque la pression dans la conduite de freinage est supérieure à la pression atmosphérique ;
- un raccord de conduite générale à connecter à une conduite générale prévue pour être portée à une pression dont l'écart à une pression de référence est représentatif de l'intensité du freinage à effectuer, aucun freinage ne devant être effectué lorsque la pression dans la conduite générale est semblable à ladite pression de référence, un freinage devant être effectué lorsque la pression dans la conduite générale est inférieure à ladite pression de référence ;
- un raccord de réservoir de commande à connecter à un réservoir de commande prévu pour être porté à ladite pression de référence ;
- un raccord de réservoir auxiliaire à connecter à un réservoir auxiliaire prévu pour stocker de l'air comprimé ;
- un dispositif principal en liaison fluidique avec ledit raccord de conduite de freinage, ledit raccord de conduite générale, ledit raccord de réservoir de commande, ledit raccord de réservoir auxiliaire et un échappement à l'atmosphère, ledit dispositif principal étant configuré pour commander sélectivement un trajet de communication entre ledit raccord de conduite de freinage et soit ledit échappement soit ledit raccord de réservoir auxiliaire, en fonction de la pression audit raccord de conduite générale et de la pression audit raccord de réservoir de commande, afin que la pression au raccord de conduite de freinage soit k fois l'écart entre la pression au raccord de réservoir de commande et la pression au raccord de conduite générale, k étant un rapport de proportionnalité préfixé ;
- une valve de coupure en liaison fluidique avec ledit raccord de conduite de freinage, ledit raccord de conduite générale et ledit raccord de réservoir de commande, ladite valve de coupure étant configurée pour commander sélectivement un trajet de communication entre ledit raccord de conduite générale et ledit raccord de réservoir de commande, entre une position fermée et une position ouverte, ledit trajet étant en position ouverte lorsque la pression audit raccord de conduite de freinage est la pression atmosphérique et en position fermée lorsque la pression audit raccord de conduite de freinage est supérieure à la pression atmosphérique ; et
caractérisé en ce que ledit distributeur comporte un dispositif de réarmement en liaison fluidique avec ledit raccord de conduite de freinage, ledit raccord de réservoir de commande et un organe d'évacuation d'air, ledit dispositif de réarmement étant configuré pour commander sélectivement un trajet de communication entre ledit organe d'évacuation d'air et ledit raccord de réservoir de commande entre une position ouverte et une position fermée, ledit trajet étant en position ouverte lorsque la pression audit raccord de conduite de freinage est la pression atmosphérique, et en position fermée lorsque la pression audit raccord de conduite de freinage est supérieure à la pression atmosphérique.

Le dispositif de réarmement que comporte le distributeur selon l'invention met ainsi le raccord de réservoir de commande, et donc ce réservoir, qui fixe la pression de référence, en communication fluidique avec l'organe d'évacuation d'air lorsque la pression au raccord de conduite de freinage, et donc dans cette conduite, revient à la pression atmosphérique, c'est-à-dire en fin de freinage.

Du fait de la communication fluidique ainsi établie, une partie de l'air comprimé contenu dans le réservoir de commande va s'évacuer. La pression dans le réservoir de commande diminue donc.

Par conséquent, le moment où, en fin de freinage, la pression au raccord de conduite générale devient supérieure à la pression au raccord de réservoir de commande, se produit plus tôt.

Le distributeur selon l'invention revient donc en configuration de repos plus tôt.

Bien entendu, la baisse de pression dans le réservoir de commande due à l'évacuation d'air n'est que temporaire puisque le réservoir de commande se remplira ensuite avec de l'air comprimé en provenance de la conduite générale.

La capacité qu'a le distributeur selon l'invention à revenir plus tôt en position de repos lui permet d'être particulièrement performant sur le délai à observer entre deux freinages consécutifs, ce temps étant particulièrement court.

Au surplus, le distributeur selon l'invention, du fait de la baisse temporaire de pression qu'il provoque en fin de freinage dans le réservoir de commande, est insensible, ou en tout cas particulièrement peu sensible aux fluctuations de pression susceptibles de se produire dans la conduite générale en fin de freinage.

Ces bonnes performances ne nécessitent au distributeur selon l'invention que l'ajout du dispositif de réarmement, relativement simple, de sorte que le distributeur selon l'invention offre ces performances améliorées tout en restant simple et économique.

Selon des caractéristiques avantageuses, l'organe de mise à l'atmosphère est une poche, ledit dispositif de réarmement est également en liaison fluidique avec un échappement à l'atmosphère et est configuré pour mettre en liaison fluidique ladite poche et ledit échappement à l'atmosphère lorsque la pression audit raccord de conduite de freinage est supérieure à la pression atmosphérique.

Lorsque le dispositif de réarmement met le raccord de réservoir de commande en communication fluidique avec la poche, celle-ci est à la pression atmosphérique et c'est donc dans la poche qu'une partie de l'air comprimé contenu dans le réservoir de commande va s'évacuer.

Lorsqu'un nouveau freinage devra être effectué, la pression au raccord de conduite de freinage deviendra supérieure à la pression atmosphérique, la poche sera mise en liaison fluidique avec l'échappement à l'atmosphère et sera ainsi à nouveau prête à recevoir une partie de l'air comprimé du réservoir de commande en fin de freinage.

Le fait d'évacuer une partie de l'air du réservoir de commande dans une poche, plutôt par exemple que directement à l'atmosphère, présente l'avantage d'offrir une certaine maîtrise de la chute de pression dans le réservoir de commande.

Selon des caractéristiques avantageuses du distributeur selon l'invention, permettant de le mettre en oeuvre de façon particulièrement simple et économique, le distributeur comporte un pilote d'entraînement commun à ladite valve de coupure et audit dispositif de réarmement, en liaison fluidique avec ledit raccord de conduite de freinage, ledit pilote d'entraînement commun étant configuré pour commander à la fois le trajet de communication de la valve de coupure et le trajet de communication du dispositif de réarmement.

Selon des caractéristiques de mise en oeuvre particulièrement commodes, ledit dispositif de réarmement comporte un organe de commande fluidique, appelé ci-après organe de commande de réarmement, en liaison fluidique avec ledit raccord de réservoir de commande, ladite poche et ledit échappement à l'atmosphère, ledit organe de commande de réarmement admettant une position de repos où ledit trajet de communication du dispositif de réarmement met en communication fluidique ledit raccord de réservoir de commande avec ladite poche et admettant une position de travail où ledit trajet de communication du dispositif de réarmement met en communication fluidique ladite poche avec ledit échappement à l'atmosphère, ledit pilote d'entrainement commun laissant ledit organe de commande de réarmement dans sa position de repos lorsque la pression audit raccord de conduite de freinage est l'atmosphère et entrainant ledit organe de commande de réarmement dans sa position de travail lorsque la pression audit raccord de conduite de freinage est supérieure à l'atmosphère.

Selon des caractéristiques de mise en oeuvre avantageuses, favorables à la compacité et à la commodité de fabrication du distributeur selon l'invention :
- ledit organe de commande de réarmement est mis en oeuvre par une première chambre en liaison fluidique avec ladite poche, par une deuxième chambre en liaison fluidique avec ledit échappement, par un siège de réarmement délimitant un orifice de communication fluidique entre la première chambre et la deuxième chambre, par un piston de réarmement mobile entre une position où il est distant dudit siège de réarmement et une position où il est au contact dudit siège de réarmement et ferme ledit orifice de communication fluidique entre la première chambre et la deuxième chambre, ainsi que par un ressort de rappel sollicitant ledit piston de réarmement vers ledit siège de réarmement ;
- ledit pilote d'entraînement commun est mis en oeuvre par une troisième chambre en liaison fluidique avec ledit raccord de conduite de freinage, par une quatrième chambre à l'atmosphère, par un piston de pilote d'entraînement commun comportant une face tournée vers ladite troisième chambre et, du côté opposé, une face tournée vers ladite quatrième chambre, par un ressort de rappel sollicitant ledit piston de pilote d'entraînement commun vers ladite troisième chambre, ainsi que par une tige solidaire dudit piston de pilote d'entraînement commun, ladite tige solidaire du piston de pilote d'entraînement commun poussant ledit piston de réarmement dans ladite position où il est distant du siège de réarmement lorsque la pression du raccord de conduite de freinage est supérieure à la pression atmosphérique, ladite tige solidaire du piston de pilote d'entraînement laissant ledit piston de réarmement venir au contact du siège de réarmement lorsque la pression du raccord de conduite de freinage est la pression atmosphérique ;
- ladite première chambre et ladite deuxième chambre ont un diamètre plus petit que le diamètre de ladite quatrième chambre, par laquelle elles sont entourées ; et
- ladite poche est disposée entre la paroi externe dudit distributeur et lesdites troisième chambre et quatrième chambre.

Selon d'autres caractéristiques de mise en oeuvre particulièrement commodes, la valve de coupure comporte un organe de commande fluidique, appelé ci-après organe de commande de coupure, en liaison fluidique avec ledit raccord de conduite générale et ledit raccord de réservoir de commande, ledit organe de commande de coupure admettant une position de repos où il ouvre ledit trajet de communication entre le raccord de conduite générale et le raccord de réservoir de commande et une position de travail où il ferme ledit trajet de communication entre le raccord de conduite générale et le raccord de réservoir de commande, ledit pilote d'entrainement commun laissant ledit organe de commande de coupure dans sa position de repos lorsque la pression audit raccord de conduite de freinage est l'atmosphère et entrainant ledit organe de commande de coupure dans sa position de travail lorsque la pression audit raccord de conduite de freinage est supérieure à l'atmosphère.

Pour améliorer la propagation du freinage le long de la conduite générale, le distributeur selon l'invention comporte avantageusement un dispositif accélérateur en liaison fluidique avec ledit raccord de conduite de freinage, ledit raccord de conduite générale, ledit raccord de réservoir de commande et un organe d'évacuation d'air, ledit dispositif accélérateur étant configuré pour commander sélectivement un trajet de communication entre ledit raccord de conduite générale et ledit organe d'évacuation d'air, entre une position fermée et une position ouverte, ledit trajet étant en position ouverte lorsque la pression audit raccord de conduite générale devient inférieure à la pression audit raccord de réservoir de commande alors que la pression audit raccord de conduite de freinage est encore à la pression atmosphérique, ledit trajet étant sinon en position fermée.

Selon des caractéristiques avantageuses, l'organe d'évacuation d'air du dispositif accélérateur est un échappement à l'atmosphère.

Selon des caractéristiques de mise en oeuvre particulièrement commodes et économiques, le distributeur selon l'invention comporte alors un pilote d'entraînement commun audit dispositif accélérateur, à ladite valve de coupure et audit dispositif de réarmement, en liaison fluidique avec ledit raccord de conduite de freinage, ledit pilote d'entraînement commun étant configuré pour commander à la fois le trajet de communication du dispositif accélérateur, le trajet de communication de la valve de coupure et le trajet de communication du dispositif de réarmement.

On va maintenant poursuivre l'exposé de l'invention par la description d'un exemple de réalisation, donnée ci-après à titre illustratif et non limitatif, en référence aux dessins annexés, sur lesquels :
- la figure 1 est une illustration, sous forme de circuit pneumatique, d'un distributeur de freinage pour véhicule ferroviaire conforme à l'invention ;
- la figure 2 est une vue schématique en coupe de ce distributeur, en configuration de repos comme sur la figure 1 ;
- les figures 3 et 4 sont des vues semblables à la figure 2, montrant respectivement la configuration que prend le distributeur juste après que la pression au raccord de conduite générale soit devenue inférieure à la pression au raccord de réservoir de commande et dans une configuration que prend ensuite le distributeur ; et
- les figures 5 et 6 sont des vues semblables aux figures 2 à 4, respectivement dans une configuration que prend le distributeur quand un freinage est en train d'être effectué et que la pression au raccord de conduite générale est stable et dans une configuration que prend ensuite le distributeur juste après que la pression au raccord de conduite générale soit redevenue semblable à la pression au raccord de réservoir de commande.

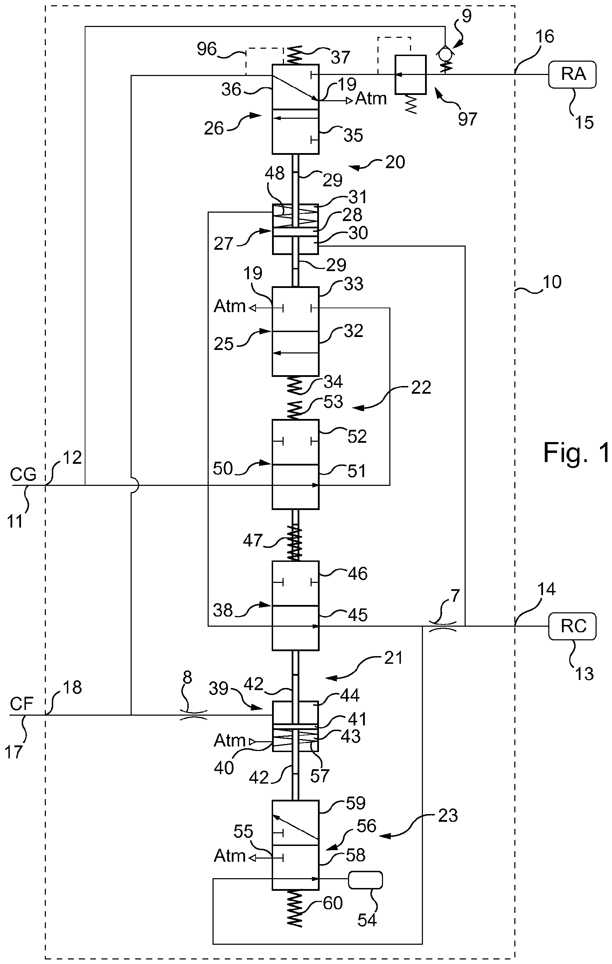

Le distributeur pneumatique 10 illustré sur la figure 1 est prévu pour être connecté à une conduite générale 11 par un raccord de conduite générale 12, à un réservoir de commande 13 par un raccord de réservoir de commande 14, à un réservoir auxiliaire 15 par un raccord de réservoir auxiliaire 16 et à une conduite de freinage 17 par un raccord de conduite de freinage 18.

La conduite de freinage 17 est prévue pour être connectée à un dispositif de freinage (non illustré) configuré pour fournir un freinage d'une intensité fonction de la pression régnant dans la conduite de freinage 17, aucun freinage ne devant être effectué lorsque la pression dans la conduite de freinage 17 est la pression atmosphérique, un freinage devant être effectué lorsque la pression dans la conduite de freinage 17 est supérieure à la pression atmosphérique.

Il est ici rappelé que dans le présent mémoire, l'expression « *conduite de freinage* » vise aussi bien une conduite à relier directement à un dispositif de freinage qu'une conduite à relier à un dispositif de freinage par l'intermédiaire d'un relais pneumatique.

La conduite générale 11 est prévue pour être portée à une pression dont l'écart à une pression de référence, fournie par le réservoir de commande 13, est représentatif de l'intensité du freinage à effectuer, aucun freinage ne devant être effectué lorsque la pression dans la conduite générale est semblable à la pression de référence (pression dans le réservoir de commande 13), un freinage devant être effectué lorsque la pression dans la conduite générale 11 est inférieure à cette pression de référence.

Le distributeur 10 comporte un trajet de communication fluidique entre le raccord de conduite générale 12 et le raccord de réservoir auxiliaire 16, ce trajet comportant un clapet de non-retour 9 passant dans le sens raccord de conduite générale 12 vers raccord de réservoir auxiliaire 16 et bloquant dans le sens inverse.

Ce trajet de communication permet à l'air comprimé de la conduite générale 11 de remplir le réservoir auxiliaire 15, sans que le réservoir 15 se vide vers la conduite générale 11 lorsque la pression de celle-ci devient inférieure à la pression dans le réservoir auxiliaire 15.

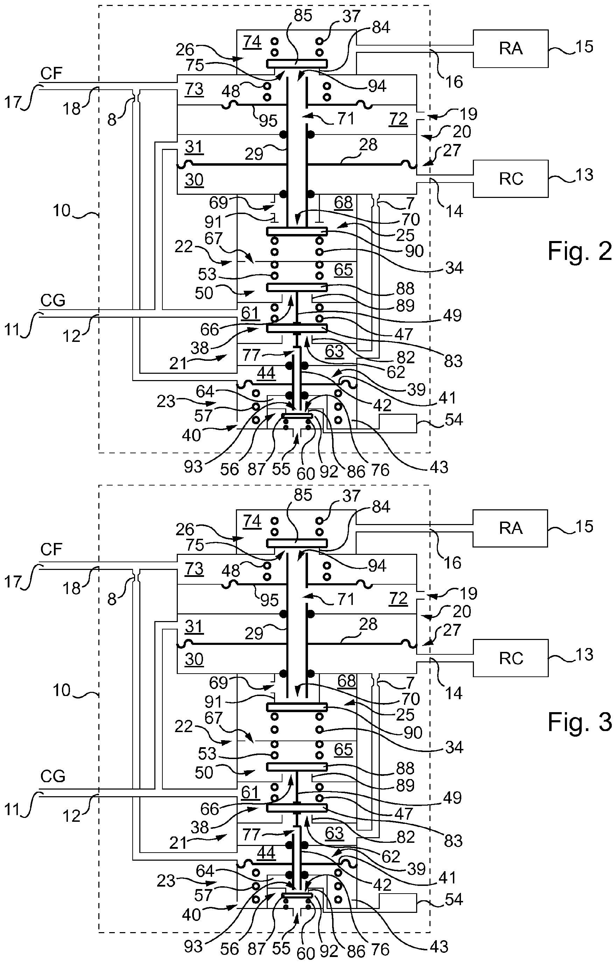

Sur les figures 2 à 6, le clapet non-retour 9 n'est pas représenté dans un souci de simplification.

Le distributeur 10 comporte en outre un dispositif principal 20, une valve de coupure 21, un dispositif accélérateur 22 et un dispositif de réarmement 23.

Le dispositif principal 20 est en liaison fluidique avec les raccords de conduite générale 12, de réservoir de commande 14, de réservoir auxiliaire 16, de conduite de freinage 18 ainsi qu'avec un échappement à l'atmosphère 19.

Sur la liaison entre le dispositif principal 20 et le raccord de réservoir auxiliaire 16, il est prévu un détendeur 97 qui sert à réguler la pression du côté du dispositif principal 20.

Ici, la réserve d'air comprimé que contient le réservoir auxiliaire 15, qui provient de la conduite générale 11, est à une pression d'environ 5 bars, alors que la pression maximale à laquelle doit être portée la conduite de freinage 17 est de l'ordre de 3,8 bars. Le détendeur 97 sert à alimenter le dispositif principal 20 avec de l'air en provenance du réservoir auxiliaire 15 à une pression d'environ 3,8 bars.

Sur les figures 2 à 6, le détendeur 97 n'est pas représenté dans un souci de simplification.

Le dispositif principal 20 est configuré pour commander sélectivement un trajet de communication entre le raccord de conduite de freinage 18 et soit l'échappement 19 soit le raccord de réservoir auxiliaire 16.

Le dispositif principal 20 comporte un organe de commande fluidique 26, appelé ci-après organe de commande principal, et un pilote d'entrainement 27, appelé ci-après pilote d'entrainement principal.

Le pilote d'entrainement principal 27 est en liaison fluidique avec les raccords de conduite générale 12 et de réservoir de commande 14. Le pilote 27 comporte un piston 28, une tige 29, deux chambres 30 et 31 et un ressort de rappel 48 sollicitant le piston 28 vers la chambre 30, c'est-à-dire vers le bas de la figure 1.

Le piston 28 comporte, du côté que l'on voit en haut sur la figure 1, une face tournée vers la chambre 31 et, du côté opposé, c'est-à-dire du côté que l'on voit en bas sur la figure 1, une face tournée vers la chambre 30.

La tige 29 est solidaire du piston 28 et s'étend de chaque côté de celui-ci.

La chambre 30 est en liaison fluidique avec le raccord de réservoir de commande 14. La chambre 31 est en liaison fluidique avec le raccord de conduite générale 12.

Le pilote d'entraînement 27, et plus précisément son piston 28 et sa tige 29, prend une position fonction de la pression au raccord de conduite générale 12 et de la pression au raccord de réservoir de commande 14. Dans le cas où la pression au raccord de conduite générale 12 est semblable à la pression au raccord de réservoir de commande 14 alors le pilote 27 est dans la position de repos illustrée sur la figure 1. Quand la pression au raccord de conduite générale 12 devient inférieure à la pression au raccord de réservoir de commande 14 alors le piston 28 et la tige 29 se déplacent vers le haut de la figure 1 pour prendre une position de travail.

Plus l'écart entre la pression au raccord de réservoir de commande 14 et la pression au raccord de conduite générale 12 est important, plus le piston 28 et la tige 29 se déplacent vers le haut.

L'extrémité de la tige 29 que l'on voit en haut sur la figure 1 est en appui contre l'organe de commande principal 26.

L'organe de commande principal 26 est en liaison fluidique avec le raccord de réservoir auxiliaire 16, le raccord de conduite de freinage 18 et l'échappement à l'atmosphère 19.

L'organe de commande principal 26 comporte une boucle de contre-réaction 96, un ressort de rappel 37 et admet deux positions extrêmes de fonctionnement, une position de repos 36 et une position de travail 35.

Le ressort de rappel 37 de l'organe de commande principal 26 permet à ce dernier de revenir à sa position de repos 36 lorsque le pilote 27 revient à sa position de repos. Le ressort de rappel 37 agit dans le même sens que le ressort de rappel 48 du pilote 27.

Lorsque l'organe de commande principal 26 est en position de repos 36, un trajet de communication est établi entre le raccord de conduite de freinage 18 et l'échappement à l'atmosphère 19.

Lorsque l'organe de commande principal 26 est en position de travail 35, un trajet de communication est établi entre le raccord de conduite de freinage 18 et le raccord de réservoir auxiliaire 16.

Ainsi, la position de travail 35 permet d'augmenter la pression au raccord de conduite de freinage 18 tandis que la position de repos 36 permet de diminuer la pression au raccord de conduite de freinage 18.

En outre du pilote 27 et du ressort 37, l'organe de commande principal 26 est soumis à l'influence de la pression au raccord de conduite de freinage 18, ainsi que schématisé sur la figure 1 par la boucle de contre-réaction 96.

Le pilote 27 et l'organe de commande 26 sont configurés pour que la pression au raccord de conduite de freinage 18 soit de k fois l'écart entre la pression au raccord de réservoir de commande 14 et la pression au raccord de conduite générale 12, k étant de l'ordre de 2,53 (3,8/1,5).

Il est ici rappelé que dans le présent mémoire, il est entendu que l'insensibilité aux diminutions minimes de la pression au raccord de conduite générale est couverte par les indications selon lesquelles la pression au raccord de conduite de freinage est de k fois l'écart entre la pression au raccord de réservoir de commande et la pression au raccord de conduite générale.

Le pilote 27 prend une position correspondant à cet écart, en l'occurrence la position de repos lorsque la pression au raccord de conduite générale 12 est semblable à la pression au raccord de réservoir de commande 14, et une position de travail lorsque la pression au raccord de conduite générale 12 est inférieure à la pression au raccord de réservoir de commande 14.

Grâce à la boucle de contre-réaction 96, l'organe de commande principal 26 régule la pression au raccord de conduite de freinage 18 en fonction de la consigne donnée par la position du pilote 27.

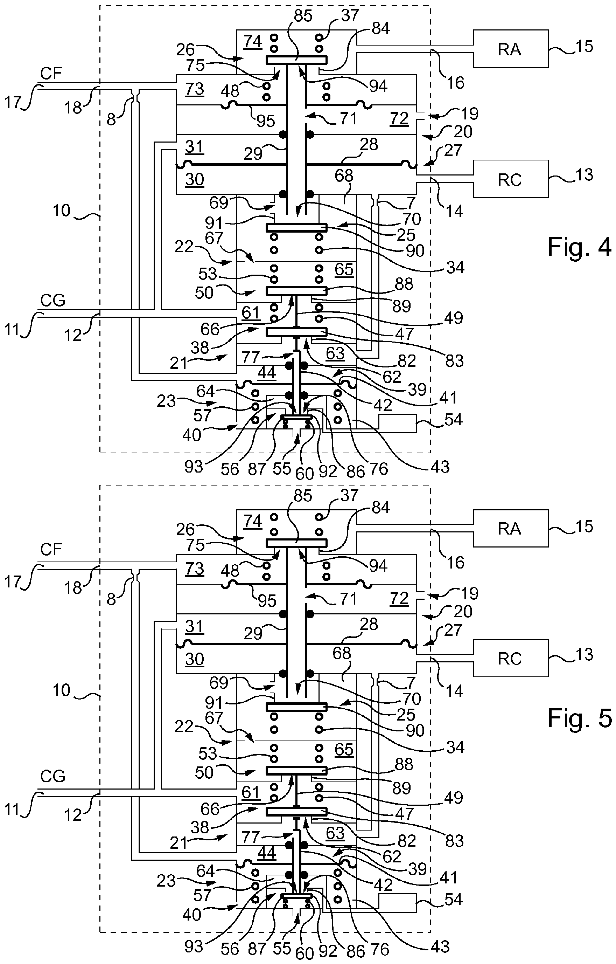

Si la pression au raccord de conduite de freinage 18 est trop faible, l'organe de commande principal 26 se met dans la position de travail 35 pour augmenter la pression au raccord de conduite de freinage 18. Si la pression au raccord de conduite de freinage 18 est trop élevée, l'organe de commande principal 26 se met dans la position de repos 36 pour faire baisser la pression au raccord de conduite de freinage 18. Si la pression au raccord de conduite de freinage 18 correspond à la consigne, l'organe de commande principal 26 se met dans une position intermédiaire (non représentée sur la figure 1 mais décrite ci-après à l'appui de la figure 5) où le raccord de conduite de freinage 18 est isolé à la fois de l'échappement 19 et du raccord de réservoir auxiliaire 16.

On va maintenant décrire la valve de coupure 21.

La valve de coupure 21 est en liaison fluidique avec les raccords de conduite générale 12, de réservoir de commande 14 et de conduite de freinage 18.

La valve de coupure 21 est configurée pour commander sélectivement un trajet de communication entre le raccord de conduite générale 12 et le raccord de réservoir de commande 14.

La valve de coupure 21 comporte un organe de commande fluidique 38, appelé ci-après organe de commande de coupure, et un pilote d'entrainement 39, appelé ci-après pilote d'entrainement de coupure.

Le pilote d'entrainement de coupure 39 est en liaison fluidique avec le raccord de conduite de freinage 18 et un orifice à l'atmosphère 40. Le pilote 39 comporte un piston 41, une tige 42, deux chambres 43 et 44 et un ressort de rappel 57 sollicitant le piston 41 vers la chambre 44, c'est-à-dire vers le haut de la figure 1.

Le piston 41 comporte, du côté que l'on voit en haut sur la figure 1, une face tournée vers la chambre 44 et, du côté opposé, c'est-à-dire du côté que l'on voit en bas sur la figure 1, une face tournée vers la chambre 43.

La tige 42 est solidaire du piston 41 et s'étend de chaque côté de celui-ci.

La chambre 44 est en liaison fluidique avec le raccord de conduite de freinage 18. La chambre 43 est à l'atmosphère par l'orifice 40.

Le pilote 39, et plus précisément son piston 41 et sa tige 42, prend une position fonction de la pression au raccord de conduite de freinage 18. Dans le cas où la pression au raccord de conduite de freinage 18 est la pression atmosphérique alors le pilote 39 est dans la position de repos illustrée sur la figure 1. Quand la pression au raccord de conduite de freinage 18 devient supérieure à la pression atmosphérique alors le piston 41 et la tige 42 se déplacent vers le bas de la figure 1 pour prendre une position de travail.

Il est ici rappelé que dans le présent mémoire, il est entendu que les effets de seuil sont couverts par les indications selon lesquelles le trajet de communication entre le raccord de conduite générale et le raccord de réservoir de commande est en position ouverte lorsque la pression au raccord de conduite de freinage est la pression atmosphérique, et en position fermée lorsque la pression au raccord de conduite de freinage est supérieure à la pression atmosphérique.

L'organe de commande de coupure 38 est en liaison fluidique avec le raccord de conduite générale 12 et le raccord de réservoir de commande 14.

L'organe de commande de coupure 38 comporte un ressort de rappel 47 et admet deux positions de fonctionnement, une position de repos 45 et une position de travail 46.

Lorsque l'organe de commande de coupure 38 est en position de repos 45, le trajet de communication entre le raccord de conduite générale 12 et le raccord de réservoir de commande 14 est ouvert.

Lorsque l'organe de commande de coupure 38 est en position de travail 46, le trajet de communication entre le raccord de conduite générale 12 et le raccord de réservoir de commande 14 est fermé.

Le changement de positions de fonctionnement est commandé par le pilote 39. L'organe de commande de coupure 38 est en position de repos 45 lorsque le pilote 39 est en position de repos c'est-à-dire lorsque la pression au raccord de conduite de freinage 18 est la pression atmosphérique. L'organe de commande de coupure 38 est en position de travail 46 lorsque le pilote 39 est en position de travail, c'est-à-dire lorsque la pression au raccord de conduite de freinage 18 est devenue supérieure à la pression atmosphérique.

L'extrémité de la tige 42 que l'on voit en haut sur la figure 1 est en appui contre l'organe de commande de coupure 38.

Le ressort de rappel 47 de l'organe de commande de coupure 38 permet à ce dernier de passer à sa position de travail 46 lorsque le pilote 39 passe à sa position de travail, à savoir quand la pression au raccord de conduite de freinage 18 est supérieure à la pression atmosphérique. Le ressort de rappel 57 du pilote 39 permet à l'organe de commande de coupure 38 de revenir à sa position de repos 45 lorsque le pilote 39 revient à sa position de repos, à savoir quand la pression au raccord de conduite de freinage 18 est de nouveau égale à la pression atmosphérique. Le ressort de rappel 47 agit en sens inverse au ressort de rappel 57 du pilote 39.

Le pilote 39 et l'organe de commande 38 confèrent à la valve de coupure 21 une position de repos où le trajet de communication entre les raccords de conduite générale 12 et de réservoir de commande 14 est ouvert, et une position de travail où le trajet de communication entre les raccords de conduite générale 12 et de réservoir de commande 14 est fermé, en fonction de la pression dans le raccord de conduite de freinage 18.

On va maintenant décrire le dispositif accélérateur 22.

Le dispositif accélérateur 22 est en liaison fluidique avec les raccords de conduite générale 12, de réservoir de commande 14, de conduite de freinage 18 et avec l'échappement à l'atmosphère 19.

Le dispositif accélérateur 22 est configuré pour commander sélectivement un trajet de communication entre le raccord de conduite générale 12 et l'échappement à l'atmosphère 19.

Le dispositif accélérateur 22 comporte un premier organe de commande fluidique 50, appelé ci-après premier organe de commande accélérateur, et un deuxième organe de commande fluidique 25, appelé ci-après deuxième organe de commande accélérateur.

Le premier organe de commande accélérateur 50 est en liaison fluidique avec le raccord de conduite générale 12 et le deuxième organe de commande accélérateur 25, lequel est également en liaison fluidique avec l'échappement 19.

Le premier organe de commande accélérateur 50 comporte un ressort de rappel 53 et admet deux positions de fonctionnement, une position de repos 51 et une position de travail 52.

Le deuxième organe de commande accélérateur 25 comporte un ressort de rappel 34 et admet deux positions de fonctionnement, une position de repos 33 et une position de travail 32.

Le trajet de communication entre le raccord de conduite générale 12 et l'échappement à l'atmosphère 19 est fermé soit lorsque le premier organe de commande 50 est dans sa position de travail 52 soit lorsque le deuxième organe de commande 25 est dans sa position de repos 33.

Le trajet de communication entre le raccord de conduite générale 12 et l'échappement 19 est ouvert lorsque le premier organe de commande accélérateur 50 est dans sa position de repos 51 et que le deuxième organe de commande accélérateur 25 est dans sa position de travail 32.

Le changement de positions de fonctionnement du premier organe de commande accélérateur 50 est commandé par le pilote 39. Le premier organe de commande accélérateur 50 est en position de repos 51 lorsque le pilote 39 est en position de repos, c'est-à-dire lorsque la pression au raccord de conduite de freinage 18 est la pression atmosphérique. Le premier organe de commande accélérateur 50 est en position de travail 52 lorsque le pilote 39 est en position de travail, c'est-à-dire lorsque la pression au raccord de conduite de freinage 18 est devenue supérieure à la pression atmosphérique.

L'extrémité de l'organe de commande de coupure 38 que l'on voit en haut sur la figure 1 est en appui contre le premier organe de commande accélérateur 50.

Le ressort de rappel 53 du premier organe de commande accélérateur 50 permet à ce dernier de passer à sa position de travail 52 lorsque le pilote 39 passe à sa position de travail, à savoir quand la pression au raccord de conduite de freinage 18 est supérieure à la pression atmosphérique. Le ressort de rappel 57 du pilote 39 permet au premier organe de commande accélérateur 50 de revenir à sa position de repos 51 lorsque le pilote 39 revient à sa position de repos, à savoir quand la pression au raccord de conduite de freinage 18 est de nouveau la pression atmosphérique. Le ressort de rappel 53 agit en sens inverse au ressort de rappel 57 du pilote 39.

Le changement de positions de fonctionnement du deuxième organe de commande accélérateur 25 est commandé par le pilote 27. Le deuxième organe de commande accélérateur 25 est en position de repos 33 lorsque le pilote 27 est en position de repos, c'est-à-dire lorsque la pression au raccord de conduite générale 12 est semblable à la pression au raccord de réservoir de commande 14. Le deuxième organe de commande accélérateur 25 est en position de travail 32 lorsque le pilote 27 est en position de travail, c'est-à-dire lorsque la pression au raccord de conduite générale 12 est inférieure à la pression au raccord de réservoir de commande 14.

L'extrémité de la tige 29 que l'on voit en bas sur la figure 1 est en appui contre l'organe de commande accélérateur 25.

Le ressort de rappel 34 du deuxième organe de commande accélérateur 25 permet à ce dernier de passer à sa position de travail 32 lorsque le pilote 27 passe à sa position de travail, à savoir quand la pression au raccord de conduite générale 12 est de nouveau inférieure à la pression au raccord de réservoir de commande 14. Le ressort de rappel 48 du pilote 27 permet au deuxième organe de commande accélérateur 25 de revenir à sa position de repos 33 lorsque le pilote 27 revient à sa position de repos, à savoir quand la pression au raccord de conduite générale 12 est de nouveau semblable à la pression au raccord de réservoir de commande 14. Le ressort de rappel 34 agit en sens inverse au ressort de rappel 48 du pilote 27.

Le pilote 39 associé au premier organe de commande accélérateur 50 et le pilote 27 associé au deuxième organe de commande accélérateur 25 confèrent au dispositif accélérateur 22 une position de repos où le trajet de communication entre le raccord de conduite générale 12 et l'échappement 19 est fermé, et une position de travail où le trajet de communication entre le raccord de conduite générale 12 et l'échappement 19 est ouvert, en fonction de la pression au raccord de conduite générale 12, de la pression au raccord de réservoir de commande 14 et de la pression au raccord de conduite de freinage 18.

Ainsi qu'il vient d'être décrit, le pilote d'entraînement 39 est commun à la valve de coupure 21 et au dispositif accélérateur 22.

Cela permet au distributeur pneumatique 10 d'être particulièrement compact et économique.

De même, le pilote d'entraînement 27 est commun au dispositif principal 20 et au dispositif accélérateur 22.

Cela permet également au distributeur pneumatique 10 d'être particulièrement compact et économique.

On va maintenant décrire le dispositif de réarmement 23.

Le dispositif de réarmement 23 est en liaison fluidique avec le raccord de réservoir de commande 14, le raccord de conduite de freinage 18, un échappement à l'atmosphère 55 et une poche 54, ici interne au distributeur 10.

Le dispositif de réarmement 23 est configuré pour commander sélectivement un trajet de communication entre la poche 54 et soit le raccord de réservoir de commande 14 soit l'échappement à l'atmosphère 55.

Le dispositif de réarmement 23 comporte un organe de commande fluidique 56, appelé ci-après organe de commande de réarmement.

L'organe de commande de réarmement 56 est en liaison fluidique avec le raccord de réservoir de commande 14, l'échappement à l'atmosphère 55 et la poche 54.

L'organe de commande de réarmement 56 comporte un ressort de rappel 60 et admet deux positions de fonctionnement, une position de repos 58 et une position de travail 59.

Lorsque l'organe de commande de réarmement 56 est en position de repos 58, le trajet de communication entre le raccord de réservoir de commande 14 et la poche 54 est ouvert.

Lorsque l'organe de commande de réarmement 56 est en position de travail 59, le trajet de communication entre le raccord de réservoir de commande 14 et la poche 54 est fermé tandis que le trajet de communication entre la poche 54 et l'échappement 55 est ouvert.

Le changement de positions de fonctionnement est commandé par le pilote 39. L'organe de commande de réarmement 56 est en position de repos 58 lorsque le pilote 39 est en position de repos, c'est-à-dire lorsque la pression au raccord de conduite de freinage 18 est la pression atmosphérique. L'organe de commande de réarmement 56 est en position de travail 59 lorsque le pilote 39 est en position de travail, c'est-à-dire lorsque la pression au raccord de conduite de freinage 18 est devenue supérieure à la pression atmosphérique.

L'extrémité de la tige 42 que l'on voit en bas sur la figure 1 est en appui contre l'organe de commande de réarmement 56.

Le ressort de rappel 60 de l'organe de commande de réarmement 56 permet à ce dernier de revenir à sa position de repos 58 lorsque le pilote 39 revient à sa position de repos, à savoir quand la pression au raccord de conduite de freinage 18 est de nouveau égale à la pression atmosphérique. Le ressort de rappel 60 agit dans le même sens que le ressort de rappel 57 du pilote 39.

Le pilote 39 et l'organe de réarmement 56 confèrent au dispositif de réarmement 23 une position de repos où le trajet de communication entre le raccord de réservoir de commande 14 et la poche 54 est ouvert, et une position de travail où le trajet de communication entre le raccord de réservoir de commande 14 et la poche 54 est fermé tandis que le trajet de communication entre la poche 54 et l'échappement 55 est ouvert ; en fonction de la pression dans le raccord de conduite de freinage 18.

Comme il vient d'être décrit, le pilote d'entraînement 39 est non seulement commun à la valve de coupure 21 et au dispositif accélérateur 22, mais aussi au dispositif de réarmement 23.

Cela permet également au distributeur pneumatique 10 d'être particulièrement compact et économique.

Sur la figure 1, le distributeur pneumatique 10 est en configuration de repos.

Le distributeur pneumatique 10 prend cette configuration :
- lorsque ses différents raccords sont à la pression atmosphérique (train en stationnement ou freinage d'urgence) ;
- lorsqu'aucun freinage ne doit être effectué (raccord de conduite générale 12, raccord de réservoir de commande 14 et raccord de réservoir auxiliaire 16 chacun à la même pression tandis que le raccord de conduite de frein 18 est à la pression atmosphérique) ; et
- lorsque le circuit pneumatique dont fait partie le distributeur 10 passe d'une configuration où il était à la pression atmosphérique à une configuration où la conduite générale 11 passe à la pression de référence tandis que se remplissent le réservoir de commande 13 et le réservoir auxiliaire 15, ce qui se produit lors de la mise en route d'un train.

La conduite générale 11 est portée à une pression d'environ 5 bars lorsqu'elle est remplie.

Le réservoir de commande 13 est rempli par la conduite générale 11, le trajet de communication du raccord de conduite générale 12 au raccord de réservoir de commande 14 étant fourni par la valve de coupure 21 qui est dans sa position de repos.

Comme on le voit sur la figure 2, le trajet du raccord de conduite générale 12 au raccord de réservoir de commande 14 se décompose ainsi : l'air sous pression arrive de la conduite générale 11 au raccord de conduite générale 12, passe par l'organe de commande 38 en position de repos 45 et arrive au raccord de réservoir de commande 14. Le réservoir de commande 13 est porté à une pression d'environ 5 bars.

La chambre 44 est à la pression atmosphérique et donc le pilote d'entraînement de coupure 39 est en position de repos.

Le réservoir auxiliaire 15 est rempli par de l'air comprimé fourni par la conduite générale 11, passant par le trajet de communication, entre les raccords 12 et 16, comportant le clapet de non-retour 9 (trajet illustré uniquement sur la figure 1). Le réservoir auxiliaire 15 est porté à la pression d'environ 5 bars.

La pression présente au raccord de conduite générale 12 est semblable à la pression au raccord de réservoir de commande 14 puisque la conduite générale 11 remplit le réservoir de commande 13. Ainsi les chambres 30 et 31 du dispositif principal 20 sont portées à la même pression d'environ 5 bars et donc le pilote 27 reste en position de repos.

La poche 54 est remplie par la conduite générale 11 car le trajet de communication du raccord de conduite générale 12 à la poche 54 est ouvert. Le trajet est ouvert parce que la valve de coupure 21 est dans sa position de repos et que le dispositif de réarmement 23 est dans sa position de repos.

Le trajet du raccord de conduite générale 12 à la poche 54 se décompose ainsi : l'air sous pression arrive de la conduite générale 11 au raccord de conduite générale 12, passe par l'organe de commande 38 en position de repos 45 puis par l'organe de commande 56 en position de repos 58 et arrive dans la poche 54. La poche 54 est portée à la pression d'environ 5 bars.

En position de repos, le trajet de communication entre le raccord de conduite générale 12 et l'échappement à l'atmosphère 19 est fermé car l'organe de commande 25 est en position de repos 33.

La pression à laquelle est portée la conduite générale 11 lors d'un freinage du train diminue d'autant plus que l'intensité du freinage doit être importante. La comparaison entre la nouvelle pression à laquelle est portée la conduite générale 11 et la pression du réservoir de commande 13 permet de connaître cette intensité.

Une diminution de la pression dans la chambre 31 du pilote 27 entraine une augmentation du volume de la chambre 30 puisque la pression de référence d'environ 5 bars reste invariante dans le réservoir 13 ce qui entraine le piston 28 et donc la tige 29 en translation vers la chambre 31, c'est-à-dire vers le haut des dessins.

Ainsi, le deuxième organe de commande accélérateur 25 passe dans sa position de travail 32. Le raccord de conduite générale 12 est en communication avec l'échappement 19.

La diminution de la pression dans la conduite générale 11 est fortement accentuée.

De plus, la pression au raccord de conduite de freinage 18 étant toujours à la pression atmosphérique, la valve de coupure 21 et l'organe de commande accélérateur 50 restent en position de repos.

La diminution de la pression dans la conduite générale 11 étant accentuée par le trajet entre le raccord de conduite générale 12 et l'échappement 19 devenu ouvert, la différence de pression entre la chambre 30 et la chambre 31 devient plus importante. L'organe de commande principal 26 passe en position de travail 35, rendant le trajet entre le raccord de réservoir auxiliaire 16 et le raccord de conduite de freinage 18 ouvert. La pression au raccord de conduite de freinage 18 devient supérieure à la pression atmosphérique.

En conséquence, le pilote d'entraînement de coupure 39 passe à sa position de travail, le premier organe de commande accélérateur 50 passe à sa position de travail 52 et l'organe de commande de coupure 38 passe à sa position de travail 46.

Ainsi, le trajet de communication entre le raccord de conduite générale 12 et l'échappement 19 se ferme ; et le trajet entre le raccord de conduite générale 12 et le raccord de réservoir de commande 14 se ferme également.

Ensuite, l'organe de commande de réarmement 56 passe à sa position de travail 59, ce qui a pour effet d'établir une communication entre l'échappement à l'atmosphère 55 et la poche 54. La poche 54 est portée à la pression atmosphérique.

Tant que la pression au raccord de conduite générale 12 reste inférieure à la pression au raccord de réservoir de commande 14, c'est-à-dire quand un freinage doit être effectué, les organes de commande 25, 38, 50 et 56 restent en position de travail.

Lorsque la pression dans la conduite générale 11 augmente pour faire cesser le freinage, la pression dans la chambre 31 remonte de même puisqu'elle est en liaison fluidique permanente avec la conduite générale 11. Ainsi, le piston, 28 du pilote 27 va revenir progressivement à sa position initiale, aidé par le ressort de rappel 48. L'organe de commande principal 26 revient donc à sa position de repos 36,

A ce stade, la pression au raccord de conduite de freinage 18 n'est pas encore à l'atmosphère puisque le trajet de communication avec l'échappement 19 vient seulement de s'établir. Le pilote d'entraînement de coupure 39 est donc encore en position de travail.

Par conséquent, le trajet de communication entre le raccord de conduite générale 12 et le raccord de réservoir de commande 14 est encore fermée ; et le trajet de communication entre la poche 54 et le raccord de réservoir de commande 14 est encore fermé.

Lorsque la pression au raccord de conduite de freinage 18 est à l'atmosphère, le pilote d'entraînement de coupure 39 passe à sa position de repos et l'organe de commande de réarmement 56 revient à sa position de repos 58.

Lors du rétablissement de la liaison entre le réservoir 13 et la poche 54, il se produit un équilibrage des pressions entre ces deux contenants puisqu'une partie de l'air sous pression dans le réservoir 13, et de surcroit dans la chambre 30 du dispositif principal 20, va dans la poche 54 ce qui fait baisser la valeur de la pression dans le réservoir 13. La pression dans la chambre 30 diminue elle aussi.

La baisse de pression dans le réservoir de commande 13 permet de réarmer plus rapidement le distributeur 10 car la pression dans la conduite générale 11 met moins de temps à être semblable à la pression dans le réservoir de commande 13, et par conséquent le pilote d'entraînement principal 27 met moins de temps à revenir à sa position de repos.

Dans l'exemple illustré, en ce qui concerne la valve de coupure 21, le dispositif accélérateur 22 et le dispositif de réarmement 23 :
- lorsqu'un freinage doit être effectué, la séquence de changements de positions des organes de commande est la suivante : c'est d'abord le deuxième organe de commande accélérateur 25 qui passe de sa position de repos 33 à sa position de travail 32 puis c'est le premier organe de commande accélérateur 50 qui passe de sa position de repos 51 à sa position de travail 52 puis c'est l'organe de commande de coupure 38 qui passe de sa position de repos 45 à sa position de travail 46 puis c'est l'organe de commande de réarmement 56 qui passe de sa position de repos 58 à sa position de travail 59 ; et
- lorsqu'un freinage doit cesser d'être effectué, la séquence de changements de positions des organes de commande est la suivante : c'est d'abord l'organe de commande de réarmement 56 qui passe de sa position de travail 59 à sa position de repos 58 puis c'est l'organe de commande de coupure 38 qui passe de sa position de travail 46 à sa position de repos 45 puis c'est le deuxième organe de commande accélérateur 25 qui passe de sa position de travail 32 à sa position de repos 33 puis c'est le premier organe de commande accélérateur 50 qui passe de sa position de travail 52 à sa position de repos 51.

Le séquençage qui vient d'être décrit est obtenu par le choix approprié des courses des pistons et des raideurs des ressorts utilisés pour mettre en oeuvre la valve de coupure 21, le dispositif accélérateur 22 et le dispositif de réarmement 23.

Les figures 2 à 6, décrites ultérieurement, montrent ce séquençage plus en détail que la figure 1.

On notera que dans le séquençage qui vient d'être décrit, lorsqu'un freinage doit cesser d'être effectué, le changement de positions du deuxième organe de commande accélérateur 25 se produit avant le changement de positions du premier organe de commande accélérateur 50 ; et qu'il est important de respecter cet ordre.

Dans le cas contraire, c'est-à-dire si le premier organe de commande accélérateur 50 passait de sa position de travail 52 à sa position de repos 51 alors que le deuxième organe de commande accélérateur 25 était toujours dans sa position de travail 32, le dispositif accélérateur 22 mettrait le raccord de conduite générale 12 en communication avec l'échappement 19, ce qui ferait baisser la pression au raccord de conduite générale 12 et ferait augmenter l'intensité du freinage, c'est-à-dire exactement le contraire de l'ordre véhiculé par la conduite générale de faire cesser le freinage.

On notera que l'étranglement 7 prévu sur la liaison entre l'organe de commande de coupure 38 et le raccord de réservoir de commande 14, entre la branche allant vers le pilote d'entraînement principal 27 et la branche allant vers l'organe de commande de réarmement 56, sert à limiter la chute de pression au raccord de réservoir de commande 14 et dans la chambre 30 lorsque la pression au raccord de conduite générale 12 se met à chuter (c'est-à-dire lorsqu'un freinage doit être effectué).

Le retard à la chute de pression au raccord de réservoir de commande 14 et à la chambre 30 du pilote 27 permet au pilote 27 de passer en position de travail, à la pression au raccord de conduite de freinage 18 de s'élever, au pilote d'entraînement de coupure 39 de passer en position de travail et à l'organe de commande de coupure 38 de passer en position de travail 46.

L'étranglement 8 disposé entre le raccord de conduite de freinage 18 et le pilote d'entraînement de coupure 39 permet de retarder le moment où le pilote 39 passe en position de travail par rapport au moment où la pression au raccord de conduite de freinage 18 devient supérieure à la pression atmosphérique, pour que le temps pendant lequel le raccord de conduite générale 12 est mis en communication avec l'échappement 19 soit suffisamment long.

Le temps de mise en communication du raccord de conduite générale 12 et de l'échappement 19 est également influencé par la longueur de la liaison fluidique entre le raccord de conduite de freinage 18 et la chambre 44 du pilote d'entraînement de coupure 39.

Dans l'exemple pratique de mise en oeuvre illustré sur les figures 2 à 6, pour que ce temps de mise en communication soit suffisamment long, le raccord de conduite de freinage 18 et la chambre 44 sont relativement distants.

On va maintenant décrire à l'appui de la figure 2, qui représente le distributeur 10 dans la configuration de repos comme sur la figure 1, comment peuvent être mis en oeuvre de façon pratique les organes de commande fluidique, à savoir l'organe de commande principal 26, l'organe de commande de coupure 38, le premier organe de commande accélérateur 50, le deuxième organe de commande accélérateur 25 et l'organe de commande de réarmement 56.

L'organe de commande principal 26 est mis en oeuvre par trois chambres 72, 73 et 74, l'espace interne de la tige 29 comportant un orifice d'entrée 94 et un orifice de sortie 71, un piston 85, un piston 95, le ressort 37 en appui sur le piston 85 et disposé dans la chambre 74, et un siège 84 délimitant un orifice de communication 75,

Les chambres 72, 73 et 74 sont disposées successivement à la suite des chambres 30 et 31, c'est-à-dire que la succession est la suivante : chambre 30 puis chambre 31 puis chambre 72 puis chambre 73 puis chambre 74.

Le piston 95 est disposé entre les chambres 72 et 73. Tout comme le piston 28, il est solidaire de la tige 29.

L'espace interne de la tige 29 et la chambre 72 sont à l'atmosphère par l'orifice 71 et l'échappement 19, la chambre 73 est en liaison fluidique avec le raccord de conduite de freinage 18 et la chambre 74 est en liaison fluidique avec le raccord de réservoir auxiliaire 16.

Il est ici rappelé qu'il existe entre le raccord de réservoir auxiliaire 16 et l'organe de commande principal 26, un détendeur 97 qui n'est pas illustré sur les figures 2 à 6.

L'organe de commande de coupure 38 est mis en oeuvre par deux chambres 61 et 63, un piston 83, un siège 82 délimitant un orifice de communication fluidique 62 et le ressort de rappel 47 en appui sur le piston 83 et disposé dans la chambre 61.

Les chambres 61 et 63 sont disposées successivement à la suite des chambres 43 et 44, c'est-à-dire que la succession est la suivante : chambre 43 puis chambre 44 puis chambre 63 puis chambre 61.

La chambre 61 est en liaison fluidique avec le raccord de conduite générale 12 et la chambre 63 est en liaison fluidique avec le raccord de réservoir de commande 14.

Le premier organe de commande accélérateur 50 est mis en oeuvre par la chambre 61, une chambre 65, un piston 88 solidaire d'une tige pleine 49, un siège 89 délimitant un orifice de communication 66 et le ressort de rappel 53 en appui sur le piston 88 et disposé dans la chambre 65.

Le deuxième organe de commande accélérateur 25 est mis en oeuvre par une chambre 68, l'espace interne de la tige 29 comportant un orifice 70, un piston 90, un siège 91 situé au bout d'une paroi dans laquelle est ménagé un orifice de communication 69, et le ressort de rappel 34 en appui sur le piston 90 et disposé dans la chambre 68.

La chambre 65 est contigüe à la chambre 61, du côté opposé à la chambre 63. La chambre 68 est contigüe à la chambre 30, du côté opposé à la chambre 31.

La chambre 65 du premier organe de commande accélérateur 50 est en liaison fluidique avec la chambre 68 du deuxième organe de commande accélérateur 25 par un orifice de communication 67. L'espace interne de la tige 29 est à l'atmosphère par l'orifice 71, la chambre 72 et l'échappement 19.

L'organe de commande de réarmement 56 est mis en oeuvre par une chambre 64, une chambre 92, l'espace interne de la tige 42 débouchant à une extrémité par un orifice 77 et à l'autre extrémité par un orifice 93, un piston 87, un siège 86 délimitant un orifice de communication 76 et le ressort de rappel 60 en appui sur le piston 87 et disposé dans la chambre 92.

Les chambres 92 et 64 sont disposées successivement à la suite des chambres 44 et 43, c'est-à-dire que la succession est la suivante : chambre 44 puis chambre 43 puis chambre 64 puis chambre 92.

La chambre 64 est en liaison fluidique avec la poche 54 et la chambre 92 est en liaison fluidique avec un échappement à l'atmosphère 55.

On observera que les chambres 43, 44, 63, 61, 65 et 68 ont sensiblement un même diamètre et que la chambre 74 a également sensiblement ce même diamètre.

On observera également que les chambres 30, 31, 72 et 73 ont sensiblement un même diamètre, plus grand que celui de la chambre 74 ou de la chambre 68.

On observera encore que les chambres 64 et 92 ont un même diamètre plus petit que le diamètre de la chambre 43 et qu'elles sont en fait entourés par la chambre 43, et d'ailleurs ici par le ressort 57.

On observera enfin que la poche 54 se situe, dans le distributeur 10, entre la paroi externe et les chambres à diamètre intermédiaire telles que 43 et 44.

Les figures 2 à 6 illustrent le distributeur 10 dans différents états de fonctionnement.

La figure 2 représente le distributeur 10 dans sa position de repos comme sur la figure 1. Le distributeur 10 prend cette position de repos lorsqu'aucun freinage n'est effectué. Les organes de commandes 26, 38, 50, 25 et 56 illustrés sur la figure 2 sont en position de repos 36, 45, 51, 33 et 58 respectives. Les pilotes d'entrainement 27 et 39 sont donc aussi en position de repos.

Lorsque l'organe de commande principal 26 est en position de repos 36, la tige 29 est distante du piston 85. Le ressort 37 et le piston 85 n'étant pas sollicités par la tige 29, le ressort 37 plaque le piston 85 sur le siège 84, obturant ainsi l'orifice 75. La chambre 73 est isolée de la chambre 74. Le trajet de communication fluidique entre le raccord de conduite de freinage 18 et le raccord de réservoir auxiliaire 16 est en position fermée.

La tige 29 étant distante du piston 85, l'orifice 94 est ouvert permettant une communication fluidique entre la chambre 73 et l'espace interne de la tige 29. Le trajet de communication fluidique entre le raccord de conduite de freinage 18 et l'échappement 19 est en position ouverte.

Lorsque l'organe de commande de coupure 38 est en position de repos 45, le piston 83 est distant du siège 82 rendant ouvert l'orifice 62. Le ressort 47 est comprimé. La chambre 61 est en communication fluidique avec la chambre 63. Le trajet entre le raccord de conduite générale 12 et le raccord de réservoir de commande 14 est en position ouverte.

Lorsque le dispositif accélérateur 22 est en position de repos, les premier et deuxième organes de commande 50 et 25 sont en position de repos 51 et 33 respectives.

Lorsque le premier organe de commande accélérateur 50 est en position de repos 51, le piston 88 est distant du siège 89. L'orifice 66 est ouvert et donc les chambres 61 et 65 sont en communication fluidique. Le piston 88 et la tige 49 sont poussés à distance du siège 89 par la tige 42 via le piston 83 de l'organe de commande de coupure 38. Le ressort 53 est comprimé.

Lorsque le deuxième organe de commande accélérateur 25 est en position de repos 33, le piston 90 est distant du siège 91. L'orifice 70 est fermé car la tige 29 est au contact du piston 90. La chambre 68 est isolée de l'espace interne de la tige 29. Le piston 90 est poussé à distance du siège 91 par la tige 29. Le ressort 34 est comprimé.

Ainsi le trajet de communication entre le raccord de conduite générale 12 et l'échappement à l'atmosphère 19 est en position fermée.

Lorsque l'organe de commande de réarmement 56 est en position de repos 58, la tige 42 est distante du piston 87. L'orifice 93 est ouvert mettant en communication fluidique, via l'espace interne de la tige 42, la chambre 63 et la chambre 64. De plus le piston 87 repose sur le siège 86 et y est maintenu par le ressort 60. L'orifice 76 est fermé par le piston 87. Le trajet de communication entre la poche 54 et le raccord de réservoir de commande 14 est en position ouverte. Le trajet de communication entre la poche 54 et l'échappement 55 est en position fermée.

La figure 3 représente le distributeur 10 juste après que la pression au raccord de conduite générale 12 soit devenue inférieure à la pression au raccord de réservoir de commande 14. Seul le deuxième organe de commande accélérateur 25 est passé dans sa position de travail 32. En effet lors de cette phase, le trajet entre le raccord de conduite générale 12 et l'atmosphère 19 est passé en position ouverte (et non plus en position fermée comme sur les figures 1 et 2).

La tige 29 n'est plus au contact du piston 90. Le piston 90, par le ressort de rappel 34, est maintenu sur le siège 91. La tige 29 étant distante du piston 90, l'orifice 70 est ouvert et, grâce à l'orifice 69 et la chambre 68, le raccord de conduite générale 12 est en communication fluidique avec l'espace interne de la tige 29, et donc avec l'échappement 19 via l'orifice 71 et la chambre 72.

La figure 4 représente le distributeur 10 dans une configuration qu'il prend ensuite. Après le deuxième organe de commande accélérateur 25, l'organe de commande principal 26, le premier organe de commande accélérateur 50 et l'organe de commande de coupure 38 sont passés dans leurs positions de travail 35, 52 et 46 respectives.

La tige 29 pousse le piston 85 et le ressort 37 se retrouve dans une position comprimée. Le piston 85 est distant du siège 84 rendant l'orifice 75 ouvert. La chambre 73 est en communication fluidique avec la chambre 74. Le trajet de communication fluidique entre le raccord de conduite de freinage 18 et le raccord de réservoir auxiliaire 16 est en position ouverte. La pression au raccord de conduite de freinage 18 est supérieure à l'atmosphère.

La tige 29 étant en contact avec le piston 85, l'orifice 94 est fermé supprimant la communication fluidique entre l'échappement 19 (via la chambre 72) et la chambre 73. Le trajet de communication fluidique entre le raccord de conduite de freinage 18 et l'échappement à l'atmosphère 19 est en position fermée.

La tige 42 ne pousse plus ni le piston 83 ni la tige 49 et le piston 88. Le ressort 53 pousse le piston 88 sur le siège 89, l'orifice 66 étant fermé. Le trajet de communication entre le raccord de conduite générale 12 et l'atmosphère 19 est en position fermée.

Le ressort 47 pousse le piston 83 sur le siège 82. L'orifice 62 est ainsi obturé par le piston 83. Les chambres 61 et 63 ne sont plus en communication fluidique. Le trajet entre le raccord de conduite générale 12 et le raccord de réservoir de commande 14 est en position fermée.

L'organe de commande de réarmement 56 est dans une position de fonctionnement intermédiaire, à mi-chemin entre sa position de repos 58 et sa position de travail 59. En effet, le trajet de communication entre le raccord de réservoir de commande 14 et la poche 54 est en position fermée mais le trajet de communication entre la poche 54 et l'échappement à l'atmosphère 55 est aussi en position fermée.

Cette position intermédiaire résulte du fait que le trajet de communication entre le raccord de réservoir auxiliaire 16 et le raccord de conduite de freinage 18 vient juste de passer en position ouverte et que la pression dans la chambre 44 n'est pas suffisante pour contrer l'effort exercé par le ressort 60 sur le piston 87 et l'effort exercé par le ressort 57 sur le piston 41.

La figure 5 représente le distributeur 10 dans une configuration qu'il prend quand un freinage est en train d'être effectué et que la pression au raccord de conduite générale 12 est stable.

L'organe de commande de réarmement 56 est dans sa position de travail 59.

La pression dans la chambre 44 est devenue suffisante pour que la tige 42 pousse le piston 87 à distance du siège 86 rendant ouvert l'orifice 76. Le ressorts 57 et 60 sont comprimés. La tige 42 est donc au contact du piston 87 ce qui rend fermé l'orifice 93. Ainsi le trajet de communication entre le raccord de réservoir de commande 14 et la poche 54 est en position fermée et le trajet de communication entre la poche 54 et l'échappement 55 est en position ouverte.

L'organe de commande principal 26 est dans une position intermédiaire à mi-chemin entre sa position de repos 35 et sa position de travail 36. Cette position est due conjointement à la pression au raccord de conduite générale 12 et donc dans la chambre 31, à l'effort généré par la pression au raccord de conduite de freinage 18 et donc dans la chambre 73 et au ressort de rappel 48 sur le piston 95. Ainsi, le trajet de communication entre le raccord de réservoir auxiliaire 16 et le raccord de conduite de freinage 18 est en position fermée et le trajet de communication entre le raccord de conduite de freinage 18 et l'échappement 19 est en position fermée.

En effet, l'effort global généré par la pression dans la chambre 31 sur le piston 28 mais aussi par la pression dans la chambre 73 et le ressort 48 sur le piston 95 n'est pas suffisant pour mettre la tige 29 à distance du piston 85.

On notera que le piston 95 sert à mettre en oeuvre la boucle de contre-réaction 96 de l'organe de commande principale 26.

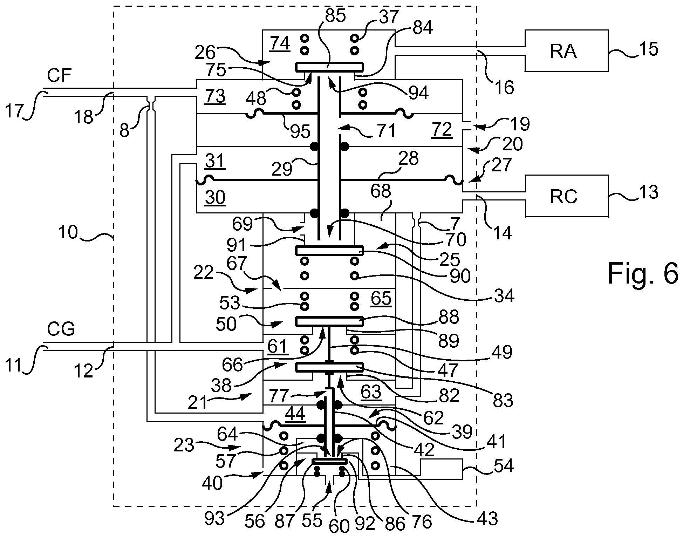

La figure 6 représente le distributeur 10 juste après que la pression au raccord de conduite générale 12 soit redevenue semblable à la pression au raccord de réservoir de commande 14.

L'organe de commande principal 26 est passé dans sa position de repos 35.

Ainsi le trajet de communication entre le raccord de conduite de freinage 18 et l'atmosphère 19 est en position ouverte car la tige 29 est distante du piston 85 en raison de l'effort généré par la pression dans la chambre 31 et par le ressort de rappel 48.

L'organe de commande de réarmement 56 est dans sa position de repos 58 car la pression dans la chambre 44 est égale à la pression dans la chambre 43 à savoir l'atmosphère. Le trajet de communication entre le raccord de réservoir de commande 14 et la poche 54 est en position ouverte.

Ensuite, le distributeur 10 revient à sa position de repos illustrée sur la figure 2.

Dans l'exemple illustré sur les figures 2 à 6, la partie mettant en oeuvre le premier organe de commande accélérateur 50, l'organe de commande de coupure 38, le pilote d'entraînement de coupure 39 et l'organe de commande de réarmement 56 (partie comportant la succession de chambres 65, 61, 63, 44, 43, 64 et 92) est contigüe et alignée avec la partie mettant en oeuvre le deuxième organe de commande accélérateur 25, le pilote d'entraînement principal 27 et l'organe de commande principal 26 (partie comportant la succession de chambres 68, 30, 31, 72, 73 et 74).

Dans une variante non illustrée, ces deux parties sont disposées différemment l'une par rapport à l'autre, en étant par exemple à distance avec une liaison fluidique qui remplace l'orifice 67.

Dans une autre variante non illustrée, la paroi dans laquelle est ménagé l'orifice 67 est supprimée (les chambres 65 et 68 sont remplacées par une chambre unique) et les ressorts 34 et 53 sont remplacés par un ressort unique.

Dans l'exemple illustré, la tige 42 du pilote d'entraînement de coupure 39 est en appui sur l'organe de commande de coupure 38 qui est lui-même en appui sur le premier organe de commande accélérateur 50.

Dans une variante non illustrée, la partie de la tige 42 que l'on voit en haut sur la figure 1 est remplacée par une partie en fourche, c'est-à-dire à deux extrémités, l'une des extrémités étant en appui sur l'organe de commande de coupure tel que 38 et l'autre extrémité sur le premier organe de commande accélérateur tel que 50. Bien entendu, dans cette variante, les courses entre les pistons et les sièges permettant de mettre en oeuvre les organes de commande fluidique 38 et 50 sont choisies pour respecter la séquence de changements de positions mentionnée ci-dessus.

En variante, le séquençage de changement de positions est différent, avec par exemple le deuxième organe de commande accélérateur 25 qui est le premier à changer de position lorsqu'un freinage doit cesser d'être effectué.

Dans l'exemple illustré sur les dessins, le pilote d'entraînement principal 27 est commun au dispositif principal 20 et au dispositif accélérateur 22.

Dans une variante non illustrée, un pilote d'entraînement spécifique est prévu pour l'organe principal 26 et un autre pilote d'entraînement est prévu pour le deuxième organe de commande accélérateur 25.

Dans l'exemple illustré, le clapet de non-retour 9, la poche 54 et le détendeur 97 font partie du distributeur 10.

Dans des variantes non illustrées, la poche 54, le détendeur 97 et/ou le clapet de non-retour 9 ne font pas partie du distributeur 10 et sont donc prévus à l'extérieur de celui-ci.

Dans d'autres variantes non illustrées, le détendeur 97 est remplacé par un limiteur de pression ; le réservoir auxiliaire 15 est alimenté en air comprimé non pas par la conduite générale 11 mais par une conduite principale dont la pression est par exemple de l'ordre de 9 bars ; et/ou le rapport de proportionnalité k est différent de la valeur de l'ordre de 2,53 susmentionnée, en étant par exemple de l'ordre de 2,67 (4/1,5) pour une conduite de freinage dans laquelle la pression maximum est de 4 bars plutôt que de 3,8 bars.

Dans une variante non illustrée, la valve de coupure 21 est sensible non seulement à la pression au raccord de conduite de freinage 18, mais aussi à l'écart entre la pression au raccord de réservoir de commande 14 et la pression au raccord de conduite générale 12 tandis qu'il est prévu une valve de verrouillage du dispositif accélérateur telle que décrite dans la demande de brevet français 2 731 192.

Dans une variante non illustrée, plutôt que d'avoir un pilote tel que 39 commun, la valve de coupure telle que 21 et le dispositif accélérateur tel que 22 comportent chacun un pilote d'entrainement distinct.

Dans une variante non illustrée, la poche 54 est remplacée par un autre organe d'évacuation d'air, par exemple un échappement à l'atmosphère combiné à un organe de commande pour commander sélectivement un trajet de communication entre cet échappement et l'organe de commande de réarmement 56, entre une position ouverte et une position fermée, ledit trajet étant en position fermée lorsque la pression au raccord de conduite de freinage 18 est la pression atmosphérique, et en position ouverte lorsque la pression au raccord de conduite de freinage 18 est supérieure à la pression atmosphérique. L'organe de commande de réarmement 56 comporte alors seulement deux orifices, l'orifice en communication avec l'échappement à l'atmosphère 55 étant supprimé, la position 58 correspondant à la position ouverte du trajet entre le raccord de réservoir de commande 14 et l'organe d'évacuation d'air (et plus précisément l'organe de commande de celui-ci) remplaçant la poche 54, la position 59 correspondant à la position fermée de ce trajet. L'organe de commande de l'organe d'évacuation d'air est configuré (notamment par sa course et la puissance de son ressort de rappel) pour réagir plus rapidement que l'organe de commande de réarmement 56 lorsque la pression au raccord de conduite de freinage 18 devient supérieure à la pression atmosphérique (freinage devant être effectué), et au contraire pour réagir moins rapidement que l'organe de commande de réarmement 56 lorsque la pression au raccord de conduite de freinage 18 devient proche de la pression atmosphérique (freinage devant cesser). Ainsi, quand un freinage est en train d'être effectué, le trajet de l'organe de commande de réarmement 56 est fermé et le trajet de l'organe de commande de l'organe d'évacuation d'air est ouvert. En fin de freinage, quand la pression au raccord de conduite de freinage 18 devient proche de la pression atmosphérique, l'organe de commande de réarmement 56 change de position le premier avec son trajet qui passe de la position fermée à la position ouverte. Comme le trajet de l'organe de commande de l'organe d'évacuation d'air est encore ouvert, le raccord de réservoir de commande 14 est en communication avec l'échappement de l'organe d'évacuation d'air, de sorte que de l'air du réservoir de commande 13 s'évacue par cet échappement. Ensuite, quand l'organe de commande de l'organe d'évacuation d'air réagit à son tour, son trajet passe en position fermée et donc l'évacuation de l'air du réservoir de commande 13 cesse. De même, en début de freinage, du fait de la différence de vitesse de réaction, le trajet entre le raccord de réservoir de commande 14 et l'échappement de l'organe d'évacuation d'air est brièvement ouvert. Pour entrainer l'organe de commande de l'organe d'évacuation d'air, on peut utiliser le pilote d'entrainement 39 ou un pilote d'entrainement différent. Pour éviter d'évacuer trop d'air, l'échappement de l'organe d'évacuation d'air peut comporter un étranglement tel que 7 ou 8.

Dans une variante non illustrée, le dispositif accélérateur 22 est en liaison fluidique avec un organe d'évacuation d'air autre que l'échappement à l'atmosphère 19, par exemple une poche telle que la poche 54. L'organe de commande accélérateur 25 comporte alors un troisième orifice, en liaison fluidique avec un échappement à l'atmosphère, et dans la position de repos 33 la poche remplaçant l'échappement à l'atmosphère 19 est en communication fluidique avec l'échappement à l'atmosphère relié au troisième orifice.

Dans une autre variante non illustrée, le distributeur ne comporte pas de dispositif accélérateur tel que 22.

On rappelle plus généralement que l'invention ne se limite pas aux exemples décrits et représentés.

## Revendications

1. Distributeur pneumatique de freinage pour véhicule ferroviaire, comportant :
- un raccord de conduite de freinage (18) à connecter à une conduite de freinage (17) prévue pour être reliée à un dispositif de freinage configuré pour fournir un freinage d'une intensité fonction de la pression régnant dans la conduite de freinage (17), aucun freinage ne devant être effectué lorsque la pression dans la conduite de freinage (17) est la pression atmosphérique, un freinage devant être effectué lorsque la pression dans la conduite de freinage (17) est supérieure à la pression atmosphérique ;
- un raccord de conduite générale (12) à connecter à une conduite générale (11) prévue pour être portée à une pression dont l'écart à une pression de référence est représentatif de l'intensité du freinage à effectuer, aucun freinage ne devant être effectué lorsque la pression dans la conduite générale (11) est semblable à ladite pression de référence, un freinage devant être effectué lorsque la pression dans la conduite générale (11) est inférieure à ladite pression de référence ;
- un raccord de réservoir de commande (14) à connecter à un réservoir de commande (13) prévu pour être porté à ladite pression de référence ;
- un raccord de réservoir auxiliaire (16) à connecter à un réservoir auxiliaire (15) prévu pour stocker de l'air comprimé ;
- un dispositif principal (20) en liaison fluidique avec ledit raccord de conduite de freinage (18), ledit raccord de conduite générale (12), ledit raccord de réservoir de commande (14), ledit raccord de réservoir auxiliaire (16) et un échappement à l'atmosphère (19), ledit dispositif principal (20) étant configuré pour commander sélectivement un trajet de communication entre ledit raccord de conduite de freinage (18) et soit ledit échappement (19) soit ledit raccord de réservoir auxiliaire (16), en fonction de la pression audit raccord de conduite générale (12) et de la pression audit raccord de réservoir de commande (14), afin que la pression au raccord de conduite de freinage (18) soit k fois l'écart entre la pression au raccord de réservoir de commande (14) et la pression au raccord de conduite générale (12), k étant un rapport de proportionnalité préfixé ;
- une valve de coupure (21) en liaison fluidique avec ledit raccord de conduite de freinage (18), ledit raccord de conduite générale (12) et ledit raccord de réservoir de commande (14), ladite valve de coupure (21) étant configurée pour commander sélectivement un trajet de communication entre ledit raccord de conduite générale (12) et ledit raccord de réservoir de commande (14), entre une position fermée et une position ouverte, ledit trajet étant en position ouverte lorsque la pression audit raccord de conduite de freinage (18) est la pression atmosphérique et en position fermée lorsque la pression audit raccord de conduite de freinage (18) est supérieure à la pression atmosphérique ; et
**caractérisé en ce que** ledit distributeur (10) comporte un dispositif de réarmement (23) en liaison fluidique avec ledit raccord de conduite de freinage (18), ledit raccord de réservoir de commande (14) et un organe d'évacuation d'air (54), ledit dispositif de réarmement (23) étant configuré pour commander sélectivement un trajet de communication entre ledit organe d'évacuation d'air (54) et ledit raccord de réservoir de commande (14), entre une position ouverte et une position fermée, ledit trajet étant en position ouverte lorsque la pression audit raccord de conduite de freinage (18) est la pression atmosphérique, et en position fermée lorsque la pression audit raccord de conduite de freinage (18) est supérieure à la pression atmosphérique.

2. Distributeur selon la revendication 1, **caractérisé en ce que** ledit organe d'évacuation d'air est une poche (54), ledit dispositif de réarmement (23) est également en liaison fluidique avec un échappement à l'atmosphère (55) et est configuré pour mettre en liaison fluidique ladite poche (54) et ledit échappement à l'atmosphère (55) lorsque la pression audit raccord de conduite de freinage (18) est supérieure à la pression atmosphérique.

3. Distributeur selon la revendication 2, **caractérisé en ce qu'**il comporte un pilote d'entraînement (39) commun à ladite valve de coupure (21) et audit dispositif de réarmement (23), en liaison fluidique avec ledit raccord de conduite de freinage (18), ledit pilote d'entraînement commun (39) étant configuré pour commander à la fois le trajet de communication de la valve de coupure (21) et le trajet de communication du dispositif de réarmement (23).

4. Distributeur selon la revendication 3, **caractérisé en ce que** ledit dispositif de réarmement (23) comporte un organe de commande fluidique (56), appelé ci-après organe de commande de réarmement, en liaison fluidique avec ledit raccord de réservoir de commande (14), ladite poche (54) et ledit échappement à l'atmosphère (55), ledit organe de commande de réarmement (56) admettant une position de repos où ledit trajet de communication du dispositif de réarmement (23) met en communication fluidique ledit raccord de réservoir de commande (14) avec ladite poche (54) et admettant une position de travail où ledit trajet de communication du dispositif de réarmement (23) met en communication fluidique ladite poche (54) avec ledit échappement à l'atmosphère (55), ledit pilote d'entrainement commun (39) laissant ledit organe de commande de réarmement (56) dans sa position de repos lorsque la pression audit raccord de conduite de freinage (18) est l'atmosphère et entrainant ledit organe de commande de réarmement (56) dans sa position de travail lorsque la pression audit raccord de conduite de freinage (18) est supérieure à l'atmosphère.

5. Distributeur selon la revendication 4, **caractérisé en ce que** ledit organe de commande de réarmement (56) est mis en oeuvre par une première chambre (64) en liaison fluidique avec ladite poche (54), par une deuxième chambre (92) en liaison fluidique avec ledit échappement (55), par un siège de réarmement (86) délimitant un orifice de communication fluidique (76) entre la première chambre (64) et la deuxième chambre (92), par un piston de réarmement (87) mobile entre une position où il est distant dudit siège de réarmement (86) et une position où il est au contact dudit siège de réarmement (86) et ferme ledit orifice de communication fluidique (76) entre la première chambre (64) et la deuxième chambre (92), ainsi que par un ressort de rappel (60) sollicitant ledit piston de réarmement (87) vers ledit siège de réarmement (86).

6. Distributeur selon la revendication 5, **caractérisé en ce que** ledit pilote d'entraînement commun (39) est mis en oeuvre par une troisième chambre (44) en liaison fluidique avec ledit raccord de conduite de freinage (18), par une quatrième chambre (43) à l'atmosphère, par un piston de pilote d'entraînement commun (41) comportant une face tournée vers ladite troisième chambre (44) et, du côté opposé, une face tournée vers ladite quatrième chambre (43), par un ressort de rappel (57) sollicitant ledit piston de pilote d'entraînement commun (41) vers ladite troisième chambre (44), ainsi que par une tige (42) solidaire dudit piston de pilote d'entraînement commun (41), ladite tige (42) solidaire du piston de pilote d'entraînement commun (41) poussant ledit piston de réarmement (87) dans ladite position où il est distant du siège de réarmement (86) lorsque la pression du raccord de conduite de freinage (18) est supérieure à la pression atmosphérique, ladite tige (42) solidaire du piston de pilote d'entraînement laissant ledit piston de réarmement (87) venir au contact du siège de réarmement (86) lorsque la pression du raccord de conduite de freinage (18) est la pression atmosphérique.

7. Distributeur selon la revendication 6, **caractérisé en ce que** ladite première chambre (64) et ladite deuxième chambre (92) ont un diamètre plus petit que le diamètre de ladite quatrième chambre (43), par laquelle elles sont entourées.

8. Distributeur selon l'une quelconque des revendications 5 à 7, **caractérisé en ce que** ladite poche (54) est disposée entre la paroi externe dudit distributeur (10) et lesdites troisième chambre (44) et quatrième chambre (43).

9. Distributeur selon l'une quelconque des revendications 3 à 8, **caractérisé en ce que** la valve de coupure (21) comporte un organe de commande fluidique (38), appelé ci-après organe de commande de coupure, en liaison fluidique avec ledit raccord de conduite générale (12) et ledit raccord de réservoir de commande (14), ledit organe de commande de coupure (38) admettant une position de repos où il ouvre ledit trajet de communication entre le raccord de conduite générale (12) et le raccord de réservoir de commande (14) et une position de travail où il ferme ledit trajet de communication entre le raccord de conduite générale (12) et le raccord de réservoir de commande (14), ledit pilote d'entrainement commun (39) laissant ledit organe de commande de coupure (38) dans sa position de repos lorsque la pression audit raccord de conduite de freinage (18) est l'atmosphère et entrainant ledit organe de commande de coupure (38) dans sa position de travail lorsque la pression audit raccord de conduite de freinage (18) est supérieure à l'atmosphère.

10. Distributeur selon l'une quelconque des revendications 1 à 9, **caractérisé en ce qu'**il comporte un dispositif accélérateur (22) en liaison fluidique avec ledit raccord de conduite de freinage (18), ledit raccord de conduite générale (12), ledit raccord de réservoir de commande (14) et un organe d'évacuation d'air (19), ledit dispositif accélérateur (22) étant configuré pour commander sélectivement un trajet de communication entre ledit raccord de conduite générale (12) et ledit organe d'évacuation d'air (19), entre une position fermée et une position ouverte, ledit trajet étant en position ouverte lorsque la pression audit raccord de conduite générale (12) devient inférieure à la pression audit raccord de réservoir de commande (14) alors que la pression audit raccord de conduite de freinage (18) est encore à la pression atmosphérique, ledit trajet étant sinon en position fermée.

11. Distributeur selon la revendication 10, **caractérisé en ce que** ledit organe d'évacuation d'air est un échappement à l'atmosphère (19).

12. Distributeur selon l'une quelconque des revendications 10 ou 11, **caractérisé en ce qu'**il comporte un pilote d'entraînement (39) commun audit dispositif accélérateur (22), à ladite valve de coupure (21) et audit dispositif de réarmement (23), en liaison fluidique avec ledit raccord de conduite de freinage (18), ledit pilote d'entraînement commun (39) étant configuré pour commander à la fois le trajet de communication du dispositif accélérateur (23), le trajet de communication de la valve de coupure (21) et le trajet de communication du dispositif de réarmement (23).

## Patentansprüche

1. Pneumatischer Bremsdruckverteiler für Schienenfahrzeuge, umfassend:
- einen Bremsleitungsanschluss (18) zum Verbinden mit einer Bremsleitung (17), die dazu vorgesehen ist, mit einer Bremsvorrichtung verbunden zu werden, die dazu ausgelegt ist, eine Bremsung mit einer von dem in der Bremsleitung (17) herrschenden Druck abhängenden Bremskraft zu erbringen, wobei keine Bremsung erfolgen darf, wenn der Druck in der Bremsleitung (17) der Atmosphärendruck ist, und eine Bremsung erfolgen soll, wenn der Druck in der Bremsleitung (17) höher als der Atmosphärendruck ist;
- einen Hauptleitungsanschluss (12) zum Verbinden mit einer Hauptleitung (11), die dazu vorgesehen ist, auf einen Druck gebracht zu werden, dessen Abweichung zu einem Referenzdruck repräsentativ ist für die Bremskraft der zu erfolgenden Bremsung, wobei keine Bremsung erfolgen darf, wenn der Druck in der Hauptleitung (11) mit dem Referenzdruck vergleichbar ist, und eine Bremsung erfolgen soll, wenn der Druck in der Hauptleitung (11) geringer als der Referenzdruck ist;
- einen Steuerluftbehälteranschluss (14) zum Verbinden mit einem Steuerluftbehälter (13), der dazu vorgesehen ist, auf den Referenzdruck gebracht zu werden;
- einen Hilfsluftbehälteranschluss (16) zum Verbinden mit einem Hilfsluftbehälter (15), der dazu vorgesehen ist, Druckluft zu speichern;
- eine Hauptvorrichtung (20) in Strömungsverbindung mit dem Bremsleitungsanschluss (18), dem Hauptleitungsanschluss (12), dem Steuerluftbehälteranschluss (14), dem Hilfsluftbehälteranschluss (16) und einem Auslass (19) zur Atmosphäre, wobei die Hauptvorrichtung (20) dazu ausgelegt ist, selektiv einen Verbindungsweg zwischen dem Bremsleitungsanschluss (18) und entweder dem Auslass (19) oder dem Hilfsluftbehälteranschluss (16) in Abhängigkeit von dem Druck am Hauptleitungsanschluss (12) und dem Druck am Steuerluftbehälteranschluss (14) zu steuern, damit der Druck am Bremsleitungsanschluss (18) das k-fache der Abweichung zwischen dem Druck am Steuerluftbehälteranschluss (14) und dem Druck am Hauptleitungsanschluss (12) beträgt, wobei k ein vorbestimmter Proportionalitätsfaktor ist;
- ein Absperrventil (21) in Strömungsverbindung mit dem Bremsleitungsanschluss (18), dem Hauptleitungsanschluss (12) und dem Steuerluftbehälteranschluss (14), wobei das Absperrventil (21) dazu ausgelegt ist, selektiv einen Verbindungsweg zwischen dem Hauptleitungsanschluss (12) und dem Steuerluftbehälteranschluss (14) zwischen einer Schließstellung und einer Offenstellung zu steuern, wobei der Verbindungsweg dann in Offenstellung ist, wenn der Druck am Bremsleitungsanschluss (18) der Atmosphärendruck ist, und dann in Schließstellung ist, wenn der Druck am Bremsleitungsanschluss (18) höher als der Atmosphärendruck ist;
**dadurch gekennzeichnet, dass** der Verteiler (10) eine Rückstellvorrichtung (23) enthält, die in Strömungsverbindung mit dem Bremsleitungsanschluss (18), dem Steuerluftbehälteranschluss (14) und einem Luftablassorgan (54) ist, wobei die Rückstellvorrichtung (23) dazu ausgelegt ist, selektiv einen Verbindungsweg zwischen dem Luftablassorgan (54) und dem Steuerluftbehälteranschluss (14) zwischen einer Offenstellung und einer Schließstellung zu steuern, wobei der Verbindungsweg dann in Offenstellung ist, wenn der Druck am Bremsleitungsanschluss (18) der Atmosphärendruck ist, und dann in Schließstellung ist, wenn der Druck am Bremsleitungsanschluss (18) höher als der Atmosphärendruck ist.

2. Verteiler nach Anspruch 1, **dadurch gekennzeichnet, dass** das Luftablassorgan eine Tasche (54) ist und die Rückstellvorrichtung (23) auch in Strömungsverbindung mit einem Auslass (55) zur Atmosphäre und dazu ausgelegt ist, die Tasche (54) und den Auslass (55) zur Atmosphäre dann in Strömungsverbindung zu setzen, wenn der Druck am Bremsleitungsanschluss (18) höher als der Atmosphärendruck ist.

3. Verteiler nach Anspruch 2, **dadurch gekennzeichnet, dass** er ein dem Absperrventil (21) und der Rückstellvorrichtung (23) gemeinsames Mitnahmeantriebsglied (39) aufweist, das in Strömungsverbindung mit dem Bremsleitungsanschluss (18) ist, wobei das gemeinsame Mitnahmeantriebsglied (39) dazu ausgelegt ist, zugleich den Verbindungsweg des Absperrventils (21) und den Verbindungsweg der Rückstellvorrichtung (23) zu steuern.

4. Verteiler nach Anspruch 3, **dadurch gekennzeichnet, dass** die Rückstellvorrichtung (23) ein Strömungssteuerglied (56), nachfolgend Rückstellsteuerglied genannt, aufweist, das in Strömungsverbindung mit dem Steuerluftbehälteranschluss (14), der Tasche (54) und dem Auslass (55) zur Atmosphäre ist, wobei das Rückstellsteuerglied (56) eine Ruhestellung zulässt, in welcher der Verbindungsweg der Rückstellvorrichtung (23) den Steuerluftbehälteranschluss (14) mit der Tasche (54) in Strömungsverbindung setzt, und eine Arbeitsstellung zulässt, in welcher der Verbindungsweg der Rückstellvorrichtung (23) die Tasche (54) mit dem Auslass (55) zur Atmosphäre in Strömungsverbindung setzt, wobei das gemeinsame Mitnahmeantriebsglied (39) das Rückstellsteuerglied (56) in seiner Ruhestellung belässt, wenn der Druck am Bremsleitungsanschluss (18) der Atmosphärendruck ist, und das Rückstellsteuerglied (56) in seine Arbeitsstellung mitnimmt, wenn der Druck am Bremsleitungsanschluss (18) höher als der Atmosphärendruck ist.

5. Verteiler nach Anspruch 4, **dadurch gekennzeichnet, dass** das Rückstellsteuerglied (56) von einer ersten Kammer (64) in Strömungsverbindung mit der Tasche (54), einer zweiten Kammer (92) in Strömungsverbindung mit dem Auslass (55), einem Rückstellsitz (86), der eine Strömungsverbindungsöffnung (76) zwischen der ersten Kammer (64) und der zweiten Kammer (92) eingrenzt, einem Rückstellkolben (87), der zwischen einer Stellung, in der er von dem Rückstellsitz (86) entfernt liegt, und einer Stellung beweglich ist, in der er mit dem Rückstellsitz (86) in Kontakt ist und die Strömungsverbindungsöffnung (76) zwischen der ersten Kammer (64) und der zweiten Kammer (92) verschließt, sowie von einer Rückholfeder (60) gebildet ist, welche den Rückstellkolben (87) zum Rückstellsitz (86) hin beaufschlagt.

6. Verteiler nach Anspruch 5, **dadurch gekennzeichnet, dass** das gemeinsame Mitnahmeantriebsglied (39) von einer dritten Kammer (44) in Strömungsverbindung mit dem Bremsleitungsanschluss (18), einer vierten Kammer (43) zur Atmosphäre hin, einem Kolben (41) für das gemeinsame Mitnahmeantriebsorgan, der eine der dritten Kammer (44) zugewandte Fläche und auf der entgegengesetzten Seite eine der vierten Kammer (43) zugewandte Fläche aufweist, von einer Rückholfeder (57), welche den Kolben (41) für das gemeinsame Mitnahmeantriebsglied zur dritten Kammer (44) hin beaufschlagt, sowie von einer Stange (42) gebildet wird, die fest mit dem Kolben (41) für das gemeinsame Mitnahmeantriebsglied verbunden ist, wobei die fest mit dem Kolben (41) für das gemeinsame Mitnahmeantriebsglied verbundene Stange (42) den Rückstellkolben (87) in die Stellung drückt, in der er von dem Rückstellsitz (86) beabstandet ist, wenn der Druck am Bremsleitungsanschluss (18) höher als der Atmosphärendruck ist, wobei die fest mit dem Kolben für das gemeinsame Mitnahmeantriebsglied verbundene Stange (42) den Rückstellkolben (87) in Kontakt mit dem Rückstellsitz (86) treten lässt, wenn der Druck am Bremsleitungsanschluss (18) der Atmosphärendruck ist.

7. Verteiler nach Anspruch 6, **dadurch gekennzeichnet, dass** die erste Kammer (64) und die zweite Kammer (92) einen Durchmesser haben, der kleiner als der Durchmesser der vierten Kammer (43) ist, von welcher sie umgeben werden.

8. Verteiler nach einem der Ansprüche 5 bis 7, **dadurch gekennzeichnet, dass** die Tasche (54) zwischen der Außenwand des Verteilers (10) und der dritten Kammer (44) und der vierten Kammer (43) angeordnet ist.

9. Verteiler nach einem der Ansprüche 3 bis 8, **dadurch gekennzeichnet, dass** das Absperrventil (21) ein Strömungssteuerglied (38), nachfolgend Absperrsteuerglied genannt, aufweist, das in Strömungsverbindung mit dem Hauptleitungsanschluss (12) und dem Steuerluftbehälteranschluss (14) ist, wobei das Absperrsteuerglied (38) eine Ruhestellung zulässt, in welcher es den Verbindungsweg zwischen dem Hauptleitungsanschluss (12) und dem Steuerluftbehälteranschluss (14) öffnet, und eine Arbeitsstellung zulässt, in welcher es den Verbindungsweg zwischen dem Hauptleitungsanschluss (12) und dem Steuerluftbehälteranschluss (14) schließt, wobei das gemeinsame Mitnahmeantriebsglied (39) das Absperrsteuerglied (38) in seiner Ruhestellung belässt, wenn der Druck am Bremsleitungsanschluss (18) der Atmosphärendruck ist, und das Absperrsteuerglied (38) in seine Arbeitsstellung mitnimmt, wenn der Druck am Bremsleitungsanschluss (18) höher als der Atmosphärendruck ist.

10. Verteiler nach einem der Ansprüche 1 bis 9, **dadurch gekennzeichnet, dass** er eine Beschleunigungsvorrichtung (22) in Strömungsverbindung mit dem Bremsleitungsanschluss (18), dem Hauptleitungsanschluss (12), dem Steuerluftbehälteranschluss (14) und einem Luftablassorgan (19) umfasst, wobei die Beschleunigungsvorrichtung (22) dazu ausgelegt ist, selektiv einen Verbindungsweg zwischen dem Hauptleitungsanschluss (12) und dem Luftablassorgan (19) zwischen einer Schließstellung und einer Offenstellung zu steuern, wobei der Verbindungsweg dann in Offenstellung ist, wenn der Druck am Hauptleitungsanschluss (12) geringer als der Druck am Steuerluftbehälteranschluss (14) wird, während der Druck am Bremsleitungsanschluss (18) noch auf Atmosphärendruck ist, wobei andernfalls der Verbindungsweg in Schließstellung ist.

11. Verteiler nach Anspruch 10, **dadurch gekennzeichnet, dass** das Luftablassorgan ein Auslass (19) zur Atmosphäre ist.

12. Verteiler nach einem der Ansprüche 10 oder 11, **dadurch gekennzeichnet, dass** er ein der Beschleunigungsvorrichtung (22), dem Absperrventil (21) und der Rückstellvorrichtung (23) gemeinsames Mitnahmeantriebsglied (39) aufweist, das in Strömungsverbindung mit dem Bremsleitungsanschluss (18) ist, wobei das gemeinsame Mitnahmeantriebsglied (39) dazu ausgelegt ist, zugleich den Verbindungsweg der Beschleunigungsvorrichtung (23), den Verbindungsweg des Absperrventils (21) und den Verbindungsweg der Rückstellvorrichtung (23) zu steuern.

## Claims

1. Pneumatic brake distributor valve assembly for a rail vehicle, comprising:
- a brake cylinder pipe connector (18) to connect to a brake cylinder pipe (17) provided to be linked to a braking device configured to provide braking of an intensity according to the pressure in the brake cylinder pipe (17), braking having not to be carried out when the pressure in the brake cylinder pipe (17) is atmospheric pressure, braking having to be carried out when the pressure in the brake cylinder pipe (17) is greater than atmospheric pressure;
- a train brake pipe connector (12) to connect to a train brake pipe (11) provided to be brought to a pressure of which the difference relative to a reference pressure represents the intensity of braking to perform, braking having not to be carried out when the pressure in the train brake pipe (11) is similar to said reference pressure, braking having to be carried out when the pressure in the train brake pipe (11) is less than said reference pressure;
- a control reservoir connector (14) to connect to a control reservoir (13) provided to be brought to said reference pressure;
- an auxiliary reservoir connector (16) to connect to an auxiliary reservoir (15) provided to store compressed air;
- a main device (20) in fluidic connection with said brake cylinder pipe connector (18), said train brake pipe connector (12), said control reservoir connector (14), said auxiliary reservoir connector (16) and an exhaust to atmosphere (19), said main device (20) being configured to selectively actuate a communication path between said brake cylinder pipe connector (18) and either said exhaust (19) or said auxiliary reservoir connector (16), according to the pressure at said train brake pipe connector (12) and the pressure at said control reservoir connector (14), in order for the pressure at the brake cylinder pipe connector (18) to be k times the difference between the pressure at the control reservoir connector (14) and the pressure at the train brake pipe connector (12), k being a pre-set ratio of proportionality;
- a cut-off valve (21) in fluidic connection with said brake cylinder pipe connector (18), said train brake pipe connector (12) and said control reservoir connector (14), said cut-off valve (21) being configured to selectively actuate a communication path between said train brake pipe connector (12) and said control reservoir connector (14), between a closed position and an open position, said path being in open position when the pressure at said brake cylinder pipe connector (18) is atmospheric pressure and in closed position when the pressure at said brake cylinder pipe connector (18) is greater than atmospheric pressure; and
**characterized in that** said distributor valve assembly (10) comprises a resetting device (23) in fluidic connection with said brake cylinder pipe connector (18), said control reservoir connector (14) and an air evacuation member (54), said resetting device (23) being configured to selectively actuate a communication path between said air evacuation member (54) and said control reservoir connector (14), between an open position and a closed position, said path being in open position when the pressure at said brake cylinder pipe connector (18) is atmospheric pressure, and in closed position when the pressure at said brake cylinder pipe connector (18) is greater than atmospheric pressure.

2. A distributor valve assembly according to claim 1, **characterized in that** said air evacuation member is a pocket (54), said resetting device (23) is also in fluidic connection with an exhaust to atmosphere (55) and is configured to place said pocket (54) and said exhaust to atmosphere (55) in fluidic connection when the pressure at said brake cylinder pipe connector (18) is greater than atmospheric pressure.

3. A distributor valve assembly according to claim 2, **characterized in that** it comprises a driver (39) common to said cut-off valve (21) and to said resetting device (23), in fluidic connection with said brake cylinder pipe connector (18), said common driver (39) being configured to actuate both the communication path of the cut-off valve (21) and the communication path of the resetting device (23).

4. A distributor valve assembly according to claim 3, **characterized in that** said resetting device (23) comprises a fluidic actuating member (56), below called reset actuating member, in fluidic connection with said control reservoir connector (14), said pocket (54) and said exhaust to atmosphere (55), said reset actuating member (56) having a resting position in which said communication path of the resetting device (23) places said control reservoir connector (14) in fluidic communication with said pocket (54) and having a working position in which said communication path of the resetting device (23) places said pocket (54) in fluidic communication with said exhaust to atmosphere (55), said common driver (39) leaving said reset actuating member (56) in its resting position when the pressure at said brake cylinder pipe connector (18) is atmospheric pressure and driving said reset actuating member (56) into its working position when the pressure at said brake cylinder pipe connector (18) is greater than atmospheric pressure.

5. A distributor valve assembly according to claim 4, **characterized in that** said reset actuating member (56) is implemented by a first chamber (64) in fluidic connection with said pocket (54), by a second chamber (92) in fluidic connection with said exhaust (55), by a resetting seat (86) delimiting an opening for fluidic communication (76) between the first chamber (64) and the second chamber (92), by a resetting piston (87) movable between a position in which it is away from said resetting seat (86) and a position in which it is in contact with said resetting seat (86) and closes said fluidic communication opening (76) between the first chamber (64) and the second chamber (92), as well as by a return spring (60) biasing said resetting piston (87) towards said resetting seat (86).

6. A distributor valve assembly according to claim 5, **characterized in that** said common driver (39) is implemented by a third chamber (44) in fluidic connection with said brake cylinder pipe connector (18), by a fourth chamber (43) at atmospheric pressure, by a common driver piston (41) comprising a face turned towards said third chamber (44) and, on the opposite side, a face turned towards said fourth chamber (43), by a return spring (57) biasing said common driver piston (41) towards said third chamber (44), as well as by a rod (42) joined to said common piston driver (41), said rod (42) joined to the common driver piston (41) pushing said resetting piston (87) into said position in which it is away from the resetting seat (86) when the pressure of the brake cylinder pipe connector (18) is greater than atmospheric pressure, said rod (42) joined to the driver piston letting said resetting piston (87) come into contact with the resetting seat (86) when the pressure of the brake cylinder pipe (18) is atmospheric pressure.

7. A distributor valve assembly according to claim 6, **characterized in that** said first chamber (64) and said second chamber (92) have a smaller diameter than the diameter of said fourth chamber (43), by which they are surrounded.

8. A distributor valve assembly according to any one of claims 5 to 7, **characterized in that** said pocket (54) is disposed between the outside wall of said distributor valve assembly (10) and said third chamber (44) and fourth chamber(43).

9. A distributor valve assembly according to any one of claims 3 to 8, **characterized in that** said cut-off valve (21) comprises a fluidic actuating member (38), called cut-off actuating member below, in fluidic connection with said train brake pipe connector (12) and said control reservoir connector (14), said cut-off actuating member (38) having a resting position in which it opens said communication path between the train brake pipe connector (12) and the control reservoir connector (14), and having a working position in which it closes said communication path between the train brake pipe connector (12) and the control reservoir connector (14), said common driver (39) leaving said cut-off actuating member (38) in its resting position when the pressure at said brake cylinder pipe connector (18) is atmospheric pressure and driving said cut-off actuating member (38) into its working position when the pressure at said brake cylinder pipe connector (18) is greater than atmospheric pressure.

10. A distributor valve assembly according to any one of claims 1 to 9, **characterized in that** it comprises a quick service device (22) in fluidic connection with said brake cylinder pipe connector (18), said train brake pipe connector (12), said control reservoir connector (14) and an air evacuation member (19), said quick service device (22) being configured to selectively actuate a communication path between said train brake pipe connector (12) and said air evacuation member (19), between a closed position and an open position, said path being in open position when the pressure at said train brake pipe connector (12) becomes less than the pressure at said control reservoir connector (14) while the pressure at said brake cylinder pipe connector (18) is still at atmospheric pressure, said path otherwise being in closed position.

11. A distributor valve assembly according to claim 10, **characterized in that** said air evacuation member is an exhaust to atmosphere (19).

12. A distributor valve assembly according to any one of claims 10 or 11, **characterized in that** it comprises a driver (39) common to said quick service device (22), to said cut-off valve (21) and to said resetting device (23), in fluidic connection with said brake cylinder pipe connector (18), said common driver (39) being configured to actuate at the same time the communication path of the quick service device (23), the communication path of the cut-off valve (21) and the communication path of the resetting device (23).
